# EUROPÄISCHE PATENTSCHRIFT

(11) **EP 4 210 923 B1**
(45) Veröffentlichungstag und Bekanntmachung des Hinweises auf die Patenterteilung: **11.03.2026**
(21) Anmeldenummer: 21772741.1
(22) Anmeldetag: 31.08.2021
(51) Int. Cl.: B29C 44/44, B29C 44/60, B29C 44/58, B29C 33/00

(54) **ANLAGE ZUR HERSTELLUNG WENIGSTENS EINES PARTIKELSCHAUMFORMTEILS**
SYSTEM FOR PRODUCING AT LEAST ONE PARTICLE FOAM MOULDED PART
SYSTÈME DE PRODUCTION D'AU MOINS UNE PARTIE MOULÉE EN MOUSSE DE PARTICULES

(30) Priorität: 08.09.2020 DE 102020123437
(43) Veröffentlichungstag der Anmeldung: 19.07.2023
(73) Patentinhaber: Siegfried Hofmann GmbH, 96215 Lichtenfels (DE)
(72) Erfinder: SCHÜTZ, Johannes, 96215 Lichtenfels (DE); SCHMIEDECK, Marcus, 09557 Flöha OT Falkenau (DE); HOFMANN, Stefan, 96215 Lichtenfels (DE); BECK, Jonas, 96215 Lichtenfels (DE)
(74) Vertreter: Hafner & Kohl PartmbB
(86) Internationale Anmeldenummer: PCT/EP2021/073968
(87) Internationale Veröffentlichungsnummer: WO 2022/053350

(56) Entgegenhaltungen:
- EP-A1- 0 657 266
- EP-A2- 1 579 972
- WO-A1-2014/128214
- WO-A2-2018/100154
- DE-A1- 10 124 247

## Beschreibung

Die Erfindung betrifft eine Anlage zur Herstellung wenigstens eines Partikelschaumformteils aus einem expandierbaren oder expandierten Partikelschaummaterial, umfassend wenigstens einen Formteilautomaten, welcher wenigstens eine Formwerkzeugeinrichtung zur Verarbeitung von expandierbarem oder expandiertem Partikelschaummaterial zur Herstellung eines Partikelschaumformteils umfasst.

Entsprechende Anlagen sind aus dem Bereich der Verarbeitung von expandierbaren oder expandierten Partikelschaummaterialien zur Herstellung von Partikelschaumformteilen aus dem Stand der Technik dem Grunde nach bekannt.

Wesentliche Bestandteile entsprechender Anlagen sind Formteilautomaten, welche typischerweise wenigstens eine Formwerkzeugeinrichtung zur Verarbeitung von Kunststoffpartikeln aus einem expandierbaren oder expandierten Partikelschaummaterial zur Herstellung eines Partikelschaumformteils umfassen.

Bei entsprechenden Anlagen sind den Formteilautomaten Funktionsmodule, wie z. B. Dampferzeuger, fest zugeordnet, welche im Zusammenhang mit der durch den Formteilautomaten ausführbaren Verarbeitung von expandierbaren oder expandiertem Partikelschaummaterial bestimmte Funktionen ausführen.

Die Konfiguration entsprechender Anlagen, d. h. insbesondere auch die funktionelle wie auch konstruktive Kopplung zwischen jeweiligen Formteilautomaten und jeweiligen Funktionsmodulen, ist bis dato typischerweise zentralisiert ausgelegt und verlangt damit eine fest vorgegebene Anordnung bzw. Kopplung der jeweiligen Formteilautomaten und Funktionsmodule. Beispielsweise sieht eine bekannte Konfiguration entsprechender Anlagen einen zentralen Dampferzeuger vor, welcher ein oder mehrere Formteilautomaten mit Dampf versorgt.

Eine solche zentralisierte und nicht individuell konfigurierbare Auslegung entsprechender Anlagen resultiert regelmäßig, z. B. aufgrund der notwendigen Verlegung bestimmter Versorgungsleitungen zwischen jeweiligen Formteilautomaten und Funktionsmodulen, in einer aufwändigen und kostenintensiven Infrastruktur.

WO 2018 100 154 A2 offenbart eine Vorrichtung und ein Verfahren zur Herstellung eine Partikelschaumformteils aus einem expandierbaren oder expandiertem Partikelschaummaterial.

Der Erfindung liegt hiervon ausgehend die Aufgabe zugrunde, eine demgegenüber, insbesondere im Hinblick auf die Möglichkeit einer individuellen Konfigurationsmöglichkeit von Formteilautomaten und Funktionsmodulen, verbesserte Anlage zur Herstellung wenigstens eines Partikelschaumformteils aus einem expandierbaren oder expandierten Partikelschaummaterial anzugeben.

Die Aufgabe wird durch eine Anlage zur Herstellung wenigstens eines Partikelschaumformteils aus einem expandierbaren oder expandierten Partikelschaummaterial gemäß Anspruch 1 gelöst. Die hierzu abhängigen Ansprüche betreffen mögliche Ausführungsformen der Anlage.

Ein erster Aspekt der Erfindung betrifft eine Anlage zur Herstellung wenigstens eines Partikelschaumformteils aus einem expandierbaren oder expandierten Partikelschaummaterial. Die Anlage ist sonach zur Verarbeitung von Kunststoffpartikeln aus wenigstens einem expandierbaren oder expandierten Partikelschaummaterial zur Herstellung von Partikelschaumformteilen bzw. Partikelschaumbauteilen eingerichtet und umfasst hierzu Einrichtungen zur Durchführung einer oder mehrerer Arbeitsprozesse zur Verarbeitung von Kunststoffpartikeln aus wenigstens einem expandierbaren oder expandierten Partikelschaummaterial zur Herstellung eines Partikelschaumformteils.

Der Begriff "Arbeitsprozess" beinhaltet grundsätzlich jedweden vermittels der Anlage durchführbaren Prozess, welcher direkt oder indirekt mit der Verarbeitung von Kunststoffpartikeln aus wenigstens einem expandierbaren oder expandierten Partikelschaummaterial zur Herstellung eines Partikelschaumformteils in einem Zusammenhang steht. Ein Arbeitsprozess kann sonach ein Verarbeitungsprozess sein, in welchem die (eigentliche) Verarbeitung entsprechender Kunststoffpartikel, d. h. insbesondere ein Verbinden entsprechender Kunststoffpartikel unter Ausbildung eines herzustellenden Partikelschaumformteils, erfolgt. Alternativ oder ergänzend kann ein Arbeitsprozess ein Bereitstellungsprozess sein, in welchem z. B. eine Menge an entsprechenden Kunststoffpartikeln, insbesondere eine in einem Verarbeitungsprozess zu verarbeitende Menge an entsprechenden Kunststoffpartikeln, und/oder eine Menge eines Versorgungsmediums oder Prozessfluids, insbesondere einen in einem Verarbeitungsprozess zu verarbeitende Menge eines Versorgungsmediums oder Prozessfluids, bereitgestellt wird. Alternativ oder ergänzend kann ein Arbeitsprozess ein Förderprozess sein, in welchem z. B. eine Menge an entsprechenden Kunststoffpartikeln, insbesondere eine in einem Verarbeitungsprozess zu verarbeitende Menge an entsprechenden Kunststoffpartikeln, und/oder eine Menge eines Versorgungsmediums oder Prozessfluids, insbesondere eine in einem Verarbeitungsprozess zu verarbeitende Menge eines Versorgungsmediums oder Prozessfluids, entlang einer Förderstrecke befördert wird. Alternativ oder ergänzend kann ein Arbeitsprozess ein Füllprozess sein, in welchem z. B. eine Menge an entsprechenden Kunststoffpartikeln, insbesondere eine in einem Verarbeitungsprozess zu verarbeitende Menge an entsprechenden Kunststoffpartikeln, in eine Formwerkzeugkavität einer Formwerkzeugeinrichtung eingefüllt wird. Alternativ oder ergänzend kann ein Arbeitsprozess ein Aufbereitungsprozess sein, in welchem z. B. ein, insbesondere in einem Verarbeitungsprozess verwendetes, Versorgungsmedium oder Prozessfluid, wie z. B. Dampf, Wasser, etc., aufbereitet wird.

Die Anlage umfasst sonach wenigstens einen Formteilautomaten. Der wenigstens eine Formteilautomat ist zur Durchführung einer oder mehrerer Verarbeitungsprozesse zur Verarbeitung von Kunststoffpartikeln aus wenigstens einem Partikelschaummaterial zur Herstellung eines Partikelschaumformteils eingerichtet. Der wenigstens eine Formteilautomat kann daher auch als Vorrichtung zur Verarbeitung von Kunststoffpartikeln aus wenigstens einem expandierbaren oder expandierten Partikelschaummaterial bezeichnet bzw. erachtet werden. Der wenigstens eine Formteilautomat umfasst typischerweise wenigstens eine Formwerkzeugeinrichtung zur Verarbeitung von Kunststoffpartikeln aus wenigstens einem expandierbaren oder expandierten Partikelschaummaterial zur Herstellung eines Partikelschaumformteils. Die wenigstens eine Formwerkzeugeinrichtung umfasst typischerweise wenigstens eine durch ein oder mehrere Formwerkzeugelemente definierbare oder definierte Formwerkzeugkavität, innerhalb welcher Kunststoffpartikel aus wenigstens einem expandierbaren oder expandierten Partikelschaummaterial unter Ausbildung entsprechender Partikelschaumformteile verarbeitet werden können. Der wenigstens eine Formteilautomat kann eine, z. B. gehäuse-, gestell- oder rahmenartige, Struktur umfassen, an oder in welcher wenigstens die wenigstens eine Formwerkzeugeinrichtung angeordnet oder ausgebildet ist.

Der wenigstens eine Formteilautomat weist wenigstens eine Schnittstelle zur, insbesondere funktionellen und/oder konstruktiven, Ankopplung wenigstens eines dem wenigstens einen Formteilautomaten funktionell zuordenbaren oder zugeordneten Funktionsmoduls zur Ausbildung einer individuell konfigurierten Formteilautomat-Funktionsmodul-Anordnung auf. Bei der wenigstens einen Schnittstelle kann es sich entsprechend um eine funktionelle und/oder konstruktive Schnittstelle handeln. Eine entsprechende Schnittstelle kann sonach eingerichtet sein, eine funktionelle und/oder konstruktive Kopplung eines entsprechenden Formteilautomaten mit wenigstens einem dem wenigstens einen Formteilautomaten funktionell zuordenbaren oder zugeordneten Funktionsmodul zur Ausbildung einer individuell konfigurierten Formteilautomat-Funktionsmodul-Anordnung herzustellen. Jeweilige formteilautomatseitige Schnittstellen sind insbesondere eingerichtet, mit jeweiligen funktionsmodulseitigen Schnittstellen unter Ausbildung einer individuell konfigurierbaren bzw. konfigurierten Formteilautomat-Funktionsmodul-Anordnung zusammenzuwirken. Die wenigstens eine formteilautomatseitige Schnittstelle ermöglicht dabei insbesondere ein direktes Ankoppeln wenigstens eines Funktionsmoduls; insbesondere derart, dass eine formteilautomatseitige Struktur bzw. Gehäusestruktur direkt an eine Struktur bzw. Gehäusestruktur des jeweiligen Funktionsmoduls ankoppelbar oder angekoppelt ist.

Die Anlage umfasst weiterhin wenigstens ein dem wenigstens einen Formteilautomaten unter Ausbildung einer individuell konfigurierten Formteilautomat-Funktionsmodul-Anordnung individuell zuordenbares oder zugeordnetes Funktionsmodul. Das wenigstens eine Funktionsmodul ist zur Durchführung einer oder mehrerer Arbeitsprozesse zur Verarbeitung von Kunststoffpartikeln aus wenigstens einem Partikelschaummaterial zur Herstellung eines Partikelschaumformteils eingerichtet. Das wenigstens eine Funktionsmodul umfasst je nach seiner konkreten Funktionalität wenigstens eine Funktionseinheit, welche zur Durchführung eines oder mehrerer Arbeitsprozesse zur Verarbeitung von Kunststoffpartikeln aus wenigstens einem Partikelschaummaterial zur Herstellung eines Partikelschaumformteils eingerichtet ist. Bei einem entsprechenden Arbeitsprozess kann es sich z. B. um einen entsprechenden Bereitstellungsprozess, um einen entsprechenden Förderprozess, um einen entsprechenden Füllprozess, oder um einen entsprechenden Aufbereitungsprozess handeln. Das wenigstens eine Funktionsmodul kann eine, z. B. gehäuse-, gestell- oder rahmenartige, Struktur umfassen, an oder in welcher die wenigstens eine Funktionseinheit angeordnet oder ausgebildet ist.

Das wenigstens eine Funktionsmodul weist wenigstens eine Schnittstelle zur, insbesondere funktionellen und/oder konstruktiven, Ankopplung an den wenigstens einen Formteilautomaten zur Ausbildung einer individuell konfigurierten Formteilautomat-Funktionsmodul-Anordnung auf. Bei der wenigstens einen Schnittstelle kann es sich entsprechend um eine funktionelle und/oder konstruktive Schnittstelle handeln. Eine entsprechende Schnittstelle kann sonach eingerichtet sein, eine funktionelle und/oder konstruktive Kopplung des wenigstens einen Funktionsmoduls mit dem wenigstens einen Formteilautomaten zur Ausbildung einer individuell konfigurierten Formteilautomat-Funktionsmodul-Anordnung herzustellen. Jeweilige funktionsmodulseitige Schnittstellen sind insbesondere eingerichtet, mit jeweiligen formteilautomatseitigen Schnittstellen unter Ausbildung einer individuell konfigurierbaren bzw. konfigurierten Formteilautomat-Funktionsmodul-Anordnung zusammenzuwirken. Die wenigstens eine funktionsmodulseitige Schnittstelle ermöglicht dabei insbesondere ein direktes Ankoppeln wenigstens eines Formteilautomaten; insbesondere derart, dass eine funktionsmodulseitige Struktur bzw. Gehäusestruktur direkt an eine Struktur bzw. Gehäusestruktur des jeweiligen Formteilautomaten ankoppelbar oder angekoppelt ist.

Selbstverständlich ist es denkbar, dass über entsprechende formteilautomatseitige Schnittstellen auch mehrere Formteilautomaten miteinander gekoppelt sein bzw. werden. Gleichermaßen ist es denkbar, dass über entsprechende funktionsmodulseitige Schnittstellen mehrere Funktionsmodule miteinander gekoppelt sein bzw. werden können. Ebenso ist es denkbar, dass mehrere miteinander gekoppelte Formteilautomaten mit mehreren miteinander gekoppelten Funktionsmodulen gekoppelt sind.

Grundsätzlich kann die Anlage sonach mehrere Formteilautomaten gleicher oder unterschiedlicher Konfiguration und/oder mehrere Funktionsmodule gleicher oder unterschiedlicher Konfiguration, d. h. insbesondere gleicher oder unterschiedlicher Funktionalität, aufweisen. Dabei können jeweilige Formteilautomaten und/oder jeweilige Funktionsmodule z. B. in paralleler und/oder serieller Anordnung angeordnet sein.

In allen Fällen können entsprechende individuell konfigurierbare bzw. konfigurierte Formteilautomat-Funktionsmodul-Anordnungen als individuell konfigurierbare bzw. konfigurierte Fertigungsanordnungen bzw. -maschinen zur Herstellung von Partikelschaumformteilen erachtet werden. Die individuelle Konfiguration entsprechender Formteilautomat-Funktionsmodul-Anordnungen kann entsprechend so gewählt sein bzw. werden, dass diese eine autarke Herstellung von Partikelschaumformteilen ermöglichen. Mithin können im Betrieb der Anlage erforderliche Versorgungsmedien, Materialien, etc. dezentral und direkt in der Anlage bereitgestellt, vorbereitet, verarbeitet und nachbereitet werden.

Die Anlage umfasst weiterhin wenigstens eine hardware- und/oder softwaremäßig implementierte zentrale Datenverarbeitungseinrichtung. Die zentrale Datenverarbeitungseinrichtung ist auf Grundlage der bzw. einer Konfiguration der bzw. einer individuell konfigurierten Formteilautomat-Funktionsmodul-Anordnung zur Erzeugung von den Betrieb des wenigstens Formteilautomaten und/oder des wenigstens einen Funktionsmoduls regelnden und/oder steuernden Betriebsinformationen eingerichtet. Die zentrale Datenverarbeitungseinrichtung ist typischerweise eingerichtet, entsprechende Betriebsinformationen auf Grundlage einer die Konfiguration der individuell konfigurierten Formteilautomat-Funktionsmodul-Anordnung beschreibenden Erfassungsinformation zu erzeugen. Die zentrale Datenverarbeitungseinrichtung kann ein oder mehrere hardware- und/oder softwaremäßig implementierte Datenverarbeitungselemente umfassen, welche auf Grundlage einer Konfiguration der bzw. einer individuell konfigurierten Formteilautomat-Funktionsmodul-Anordnung bzw. von eine entsprechende individuell konfigurierte Formteilautomat-Funktionsmodul-Anordnung beschreibenden Daten, d. h. z. B. entsprechender Erfassungsinformationen, Datenverarbeitungsprozesse zur Erzeugung entsprechender Betriebsinformationen ausführen. Die zentrale Datenverarbeitungseinrichtung ist insbesondere eingerichtet, entsprechende Betriebsinformationen zu erzeugen, welche eine vollständig automatisierbare bzw. automatisierte Regelung und/oder Steuerung des Betriebs des wenigstens einen Formteilautomaten und/oder des wenigstens einen Funktionsmoduls ermöglichen. Entsprechende Betriebsinformationen können sämtliche für eine vollständig automatisierbare bzw. automatisierte Regelung und/oder Steuerung des Betriebs des wenigstens einen Formteilautomaten und/oder des wenigstens einen Funktionsmoduls erforderliche Regelungs- und/oder Steuerungsinformationen bzw. -vorschriften beinhalten. Mithin kann auf Grundlage entsprechender Betriebsinformationen eine vollständig autarke Regelung und/oder Steuerung des Betriebs des wenigstens einen Formteilautomaten und/oder des wenigstens einen Funktionsmoduls und somit der Anlage erfolgen.

Entsprechend kann die zentrale Datenverarbeitungseinrichtung auf Grundlage entsprechender Betriebsinformationen auch zur Steuerung bzw. Regelung des Betriebs der gesamten Anlage eingerichtet sein. Dem Betrieb der Anlage können sonach Betriebsinformationen zugrunde gelegt werden, welche auf Grundlage der individuellen Konfiguration der Anlage, d. h. insbesondere einer entsprechenden individuell konfigurierten Formteilautomat-Funktionsmodul-Anordnung, erzeugt wurden. Die über die zentrale Datenverarbeitungseinrichtung erzeugbaren oder erzeugten Betriebsinformationen können sonach im Hinblick auf die Konfiguration einer entsprechenden Formteilautomat-Funktionsmodul-Anordnung maßgeschneidert sein, was typischerweise einen sehr effizienten Betrieb der Anlage ermöglicht. Dies gilt auch für den Fall, in dem sich eine Konfiguration einer Formteilautomat-Funktionsmodul-Anordnung ändert, denn in diesem Fall kann die Änderung der Konfiguration der Formteilautomat-Funktionsmodul-Anordnung von der zentralen Datenverarbeitungseinrichtung berücksichtigt und entsprechend geänderte Betriebsinformationen erzeugt werden.

Wie sich im Weiteren ergibt, kann die zentrale Datenverarbeitungseinrichtung entsprechende Betriebsinformationen, z. B. über formteilautomatseitige und/oder funktionsmodulseitige Datenübertragungseinrichtungen, an den wenigstens einen Formteilautomaten und/oder das wenigstens eine Funktionsmodul übertragen, sodass die jeweiligen Betriebsinformationen über jeweilige formteilautomatseitige und/oder funktionsmodulseitige Regelungs- und/oder Steuerungseinrichtungen zur Regelung und/oder Steuerung des Betriebs des jeweiligen Formteilautomaten und/oder des jeweiligen Funktionsmoduls verarbeitet werden können.

Die Anlage ermöglicht es sonach zunächst über das Zusammenwirken jeweiliger formteilautomatseitiger Schnittstellen mit jeweiligen funktionsmodulseitigen Schnittstellen bedarfsweise individuell konfigurierbare bzw. konfigurierte Formteilautomat-Funktionsmodul-Anordnungen auszubilden, sodass die Anlage einerseits beliebig konfigurierbar ist und andererseits eine bestehende Konfiguration einer Anlage, etwa durch Neuanordnung bestehender Formteilautomaten und/oder Funktionsmodule, Ergänzung von Formteilautomaten und/oder Funktionsmodulen, Entfernung von Formteilautomaten und/oder Funktionsmodulen, beliebig veränderbar ist. Durch Ergänzung von Funktionsmodulen können bestehende Funktionalitäten der Anlage bedarfsweise erweitert oder der Anlage bedarfsweise neue Funktionalitäten hinzugefügt werden. Entsprechend können durch eine Entfernung von Funktionsmodulen bestehende Funktionalitäten der Anlage bedarfsweise reduziert werden.

Weiterhin ermöglicht es die Anlage über die zentrale Datenverarbeitungseinrichtung, insbesondere automatisierbar bzw. automatisiert, auf Grundlage einer individuellen Konfiguration einer Formteilautomat-Funktionsmodul-Anordnung entsprechende Betriebsinformationen zu erzeugen, sodass die jeweilige individuell konfigurierte Formteilautomat-Funktionsmodul-Anordnung ohne Weiteres in Betrieb genommen und betrieben werden kann. Eine entsprechende Inbetriebnahme bzw. ein entsprechender Betrieb beinhaltet, wie erwähnt, typischerweise eine, insbesondere automatisierbare bzw. automatisierte, Steuerung und/oder Regelung des Betriebs der jeweiligen Formteilautomaten und/oder Funktionsmodule der jeweiligen Formteilautomat-Funktionsmodul-Anordnung.

Insgesamt liegt damit eine, insbesondere im Hinblick auf die Möglichkeit einer individuellen Konfiguration, verbesserte Anlage zur Herstellung wenigstens eines Partikelschaumformteils aus einem expandierbaren oder expandierten Partikelschaummaterial vor.

Wie erwähnt, kann es sich bei entsprechenden formteilautomatseitigen und/oder funktionsmodulseitigen Schnittstellen um funktionelle und/oder konstruktive Schnittstellen handeln. Konkrete Beispiele entsprechender Schnittstellen werden im Weiteren in nicht abschließender Weise erläutert:
Eine entsprechende Schnittstelle des wenigstens einen Formteilautomaten kann z. B. als eine Anschlusseinrichtung zum Anschluss wenigstens eines, insbesondere leitungsartigen oder -förmigen, Versorgungsmittels zur Versorgung des wenigstens einen Formteilautomaten mit wenigstens einem Versorgungsmedium, insbesondere einem elektrischen Energieträger, wie z. B. Strom oder Spannung, und/oder einem thermischen Energieträger, wie z. B. einem Prozessfluid, und/oder einem pneumatischen Energieträger, wie z. B. einem druckbeaufschlagten Gas, ausgebildet sein oder eine solche umfassen. Alternativ oder ergänzend kann eine entsprechende Schnittstelle des wenigstens einen Funktionsmoduls als eine Anschlusseinrichtung zum Anschluss wenigstens eines, insbesondere leitungsartigen oder -förmigen, Versorgungsmittels zur Versorgung des wenigstens einen Funktionsmoduls mit wenigstens einem Versorgungsmedium, insbesondere einem elektrischen Energieträger, wie z. B. Strom oder Spannung, und/oder einem thermischen Energieträger, wie z. B. einem Prozessfluid, und/oder einem pneumatischen Energieträger, wie z. B. einem druckbeaufschlagten Gas, ausgebildet sein oder eine solche umfassen. Über jeweilige formteilautomatseitige und/oder funktionsmodulseitige Anschlusseinrichtungen lassen sich sonach Versorgungsmittel, d. h. z. B. Versorgungsleitungen, zur Versorgung des wenigstens einen Formteilautomaten und/oder des wenigstens einen Funktionsmoduls mit wenigstens einem Versorgungsmedium an den jeweiligen Formteilautomaten und/oder das jeweilige Funktionsmodul anschließen.

Ein konkretes Beispiel einer formteilautomatseitigen Anschlusseinrichtung kann eine Anschlusseinrichtung zum Anschluss wenigstens eines Versorgungsmittels zur Versorgung der wenigstens einen Formwerkzeugeinrichtung des wenigstens einen Formteilautomaten mit einem flüssigen und/oder gasförmigen Energieträger, insbesondere einem Prozessfluid, insbesondere Dampf und/oder Wasser, sein oder eine solche umfassen. Entsprechende Anschlusseinrichtungen können ein oder mehrere Anschlusselemente, wie z. B. Anschlussbuchsen, -flansche, etc., umfassen.

Alternativ oder ergänzend kann eine entsprechende Schnittstelle des wenigstens einen Formteilautomaten z. B. als eine Befestigungseinrichtung zum, insbesondere direkten, Befestigen des wenigstens einen Formteilautomaten, insbesondere einer, z. B. gehäuse-, gestell- oder rahmenartigen, Struktur des wenigstens einen Formteilautomaten, an dem wenigstens einen Funktionsmodul, insbesondere einer, z. B. gehäuse-, gestell- oder rahmenartigen, Struktur des wenigstens einen Funktionsmoduls, ausgebildet sein oder eine solche umfassen. Alternativ oder ergänzend kann eine entsprechende Schnittstelle des wenigstens einen Funktionsmoduls als eine Befestigungseinrichtung zum, insbesondere direkten, Befestigen des wenigstens einen Funktionsmoduls, insbesondere einer, z. B. gehäuse-, gestell- oder rahmenartigen, Struktur des wenigstens einen Funktionsmoduls, an dem wenigstens einen Formteilautomaten, insbesondere einer, z. B. gehäuse-, gestell- oder rahmenartigen, Struktur des wenigstens einen Formteilautomaten, ausgebildet sein oder eine solche umfassen. Über jeweilige formteilautomatseitige und/oder funktionsmodulseitige Befestigungseinrichtungen lassen sich sonach insbesondere direkte Befestigungen des wenigstens einen Formteilautomaten an dem wenigstens einen Funktionsmodul, und umgekehrt, herstellen. Entsprechende Befestigungseinrichtungen können ein oder mehrere Befestigungselemente, wie z. B. Form- und/oder Kraftschlusselemente, wie z. B. Klemm-, Schraub-, Spann- oder Rastelemente, umfassen.

Alternativ oder ergänzend kann eine entsprechende Schnittstelle des wenigstens einen Formteilautomaten als eine Datenübertragungseinrichtung zum, insbesondere direkten, Übertragen von Daten, insbesondere von entsprechenden Betriebsinformationen, an das wenigstens eine Funktionsmodul, insbesondere an eine den Betrieb des wenigstens einen Funktionsmoduls regelnde und/oder steuernde Datenverarbeitungseinrichtung des wenigstens einen Funktionsmoduls, ausgebildet sein oder eine solche umfassen. Alternativ oder ergänzend kann eine entsprechende Schnittstelle des wenigstens einen Funktionsmoduls als eine Datenübertragungseinrichtung zum, insbesondere direkten, Übertragen von Daten, insbesondere entsprechenden Betriebsinformationen, an den wenigstens einen Formteilautomaten, insbesondere an eine den Betrieb des wenigstens einen Formteilautomaten regelnde und/oder steuernde Datenverarbeitungseinrichtung des wenigstens einen Formteilautomaten, ausgebildet sein oder eine solche umfassen. Über jeweilige formteilautomatseitige und/oder funktionsmodulseitige Datenübertragungseinrichtungen lassen sich sonach direkte oder indirekte Datenübertragungen zwischen dem wenigstens einen Formteilautomaten und/oder dem wenigstens einen Funktionsmodul herstellen. Entsprechende Datenübertragungseinrichtungen können ein oder mehrere Datenübertragungselemente, wie z. B. Datenübertragungsanschlüsse (Ports), Datenübertragungsantennen, etc., umfassen. Eine Datenübertragung kann in allen Fällen über kabelgebundene Datenübertragungsverbindungen bzw. kabelgebundene Datenübertragungsprotokolle oder über kabellose Datenübertragungsverbindungen (Funk) bzw. entsprechende kabellose Datenübertragungsprotokolle (Funkprotokolle) erfolgen.

Wie weiter oben angedeutet, können entsprechende Datenübertragungseinrichtungen eingerichtet sein, entsprechende seitens der zentralen Datenverarbeitungseinrichtung erzeugte Betriebsinformationen direkt oder indirekt zu übertragen, d. h. insbesondere zu senden und/oder zu empfangen, sodass die jeweiligen Betriebsinformationen über jeweilige formteilautomatseitige und/oder funktionsmodulseitige Regelungs- und/oder Steuerungseinrichtungen zur Regelung und/oder Steuerung des Betriebs des jeweiligen Formteilautomaten und/oder des jeweiligen Funktionsmoduls verarbeitet werden können. Entsprechende formteilautomatseitige und/oder funktionsmodulseitige Regelungs- und/oder Steuerungseinrichtungen können Bestandteile entsprechender formteilautomatseitiger und/oder funktionsmodulseitiger Datenverarbeitungseinrichtungen bilden.

Einzelne, mehrere oder sämtliche formteilautomatseitige Schnittstellen und/oder funktionsmodulseitige Schnittstellen können unabhängig von ihrer konkreten Ausführung zumindest teilweise, gegebenenfalls vollständig, standardisiert ausgeführt sein, um das Koppeln von Formteilautomaten und/oder Funktionsmodulen zu vereinfachen.

Wie erwähnt, sind entsprechende Funktionsmodule zur Durchführung einer oder mehrerer Arbeitsprozesse zur Verarbeitung von Kunststoffpartikeln aus wenigstens einem expandierbaren oder expandierten Partikelschaummaterial zur Herstellung eines Partikelschaumformteils eingerichtet. Konkrete Beispiele entsprechender Funktionsmodule werden im Weiteren in nicht abschließender Weise erläutert:
Das wenigstens eine oder wenigstens ein Funktionsmodul kann als eine Bereitstellungseinrichtung zur Bereitstellung wenigstens eines Versorgungsmediums für den wenigstens einen Formteilautomaten und/oder für wenigstens ein weiteres Funktionsmodul ausgebildet sein oder eine solche umfassen. Der Begriff "Bereitstellung" kann dabei eine Erzeugung oder Speicherung eines Versorgungsmediums beinhalten. Bei einem entsprechenden Versorgungsmedium kann es sich insbesondere um einen elektrischen Energieträger, wie z. B. Strom oder Spannung, und/oder um einen thermischen Energieträger, wie z. B. ein Prozessfluid, und/oder um einen pneumatischen Energieträger, wie z. B. ein druckbeaufschlagtes Gas, handeln. Bei einem entsprechenden Versorgungsmedium bzw. Energieträger kann es sich auch um ein Prozessfluid oder um ein Temperiermedium handeln.

Eine konkrete Ausführungsform eines entsprechenden Funktionsmoduls kann z. B. eine Bereitstellungseinrichtung bzw. Temperiereinrichtung zur Bereitstellung eines Temperiermediums, wie z. B. Kühlwasser, zur Temperierung des wenigstens einen Formteilautomaten sein. Eine weitere konkrete Ausführungsform eines entsprechenden Funktionsmoduls kann z. B. eine Bereitstellungseinrichtung bzw. Prozessfluidbereitstellungseinrichtung zur Bereitstellung eines Prozessfluids, wie z. B. Dampf, zur Temperierung und damit einhergehend unter Ausbildung eines jeweiligen Partikelschaumformteils zur Verbindung von in der Formwerkzeugkavität des wenigstens einen Formteilautomaten befindlichen Kunststoffpartikeln aus wenigstens einem expandierbaren oder expandierten Partikelschaummaterial sein. Eine weitere konkrete Ausführungsform eines entsprechenden Funktionsmoduls kann z. B. eine Bereitstellungseinrichtung bzw. Druckgasbereitstellungseinrichtung zur Bereitstellung eines druckbeaufschlagten Gases, wie z. B. Druckluft, z. B. zur Trocknung der wenigstens einen Formwerkzeugkavität des wenigstens einen Formteilautomaten sein.

Alternativ oder ergänzend kann das wenigstens eine oder wenigstens ein Funktionsmodul als eine Bereitstellungseinrichtung zur Bereitstellung von elektrischer Energie und/oder kinetischer Energie und/oder pneumatischer Energie und/oder thermischer Energie für den wenigstens einen Formteilautomaten und/oder für wenigstens ein weiteres Funktionsmodul ausgebildet sein oder eine solche umfassen. Der Begriff "Bereitstellung" kann dabei eine Erzeugung oder Speicherung von elektrischer Energie und/oder kinetischer Energie und/oder pneumatischer Energie und/oder thermischer Energie beinhalten. Bei einem elektrischen Energieträger kann es sich z. B. um Strom oder Spannung handeln. Bei einem thermischen Energieträger kann es sich z. B. um ein temperiertes Prozessfluid, wie z. B. Dampf und/oder Kühlwasser, handeln. Bei einem kinematischen Energieträger kann es sich z. B. um Antriebs- oder Bewegungsenergie handeln. Bei einem pneumatischen Energieträger kann es sich z. B. um ein druckbeaufschlagtes Gas handeln.

Eine konkrete Ausführungsform eines entsprechenden Funktionsmoduls kann auch hier z. B. eine Bereitstellungseinrichtung bzw. Speichereinrichtung zur Bereitstellung bzw. Speicherung eines Temperiermediums, wie z. B. Kühlwasser, zur Temperierung des wenigstens einen Formteilautomaten sein. Eine weitere konkrete Ausführungsform eines entsprechenden Funktionsmoduls kann auch hier z. B. eine Bereitstellungseinrichtung bzw. Speichereinrichtung zur Bereitstellung bzw. Speicherung eines temperierten Prozessfluids, wie z. B. Dampf, sein. Eine weitere konkrete Ausführungsform eines entsprechenden Funktionsmoduls kann eine Antriebseinrichtung zur Bereitstellung von Antriebsenergie, z. B. zur Verwendung in einem weiteren Funktionsmodul, wie z. B. einer Druckgasbereitstellungseinrichtung, sein. Eine weitere konkrete Ausführungsform eines entsprechenden Funktionsmoduls kann auch hier z. B. eine Bereitstellungseinrichtung bzw. Speichereinrichtung zur Bereitstellung bzw. Speicherung eines druckbeaufschlagten Gases, wie z. B. Druckluft, z. B. zur Trocknung der wenigstens einen Formwerkzeugkavität des wenigstens einen Formteilautomaten sein.

Alternativ oder ergänzend kann das wenigstens eine Funktionsmodul oder wenigstens ein Funktionsmodul als ein Kraftwerk, insbesondere ein Blockheizkraftwerk, zur Bereitstellung elektrischer Energie und/oder kinetischer Energie und/oder thermischer Energie ausgebildet sein oder ein solches umfassen. Die seitens des Kraftwerks bereitgestellte Energie kann z. B. auf entsprechende Energieträger übertragen und dem wenigstens einen Formteilautomaten und/oder einem weiteren Funktionsmodul über geeignete Energietransportmittel zur Verfügung gestellt werden. Sofern die Anlage wenigstens ein Funktionsmodul in Form eines entsprechenden Kraftwerks umfasst, kann die für den Betrieb der Anlage erforderliche Energie völlig unabhängig von anderen Energiequellen erzeugt werden, was einen vollständig autarken Betrieb der Anlage ermöglichen kann.

Alternativ oder ergänzend kann das wenigstens eine Funktionsmodul oder wenigstens ein Funktionsmodul als eine Bereitstellungseinrichtung zur Bereitstellung eines über den wenigstens einen Formteilautomaten verarbeitbaren oder zu verarbeitbaren expandierbaren oder expandierten Partikelschaummaterials bzw. entsprechenden Kunststoffpartikeln ausgebildet sein oder eine solche umfassen. Eine konkrete Ausführungsform eines entsprechenden Funktionsmoduls kann hier z. B. eine Fördereinrichtung zur Förderung eines über den wenigstens einen Formteilautomaten verarbeitbaren oder zu verarbeitbaren expandierbaren oder expandierten Partikelschaummaterials bzw. entsprechender Kunststoffpartikel in die wenigstens eine Formwerkzeugkavität des wenigstens einen Formteilautomaten sein.

Alternativ oder ergänzend kann das wenigstens eine Funktionsmodul oder wenigstens ein Funktionsmodul als eine Aufbereitungseinrichtung zur Aufbereitung eines Versorgungsmediums des wenigstens einen Formteilautomaten und/oder wenigstens eines anderen Funktionsmoduls ausgebildet sein oder eine solche umfassen. Der Begriff "Aufbereitung" kann die Veränderung wenigstens einen chemischen und/oder physikalischen Parameters des jeweiligen Versorgungsmediums beinhalten.

Eine konkrete Ausführungsform eines entsprechenden Funktionsmoduls kann z. B. eine Beeinflussungseinrichtung bzw. eine Enthärtungseinrichtung zur chemischen und/oder physikalischen Enthärtung wenigstens eines dem wenigstens einen Formteilautomaten oder einem Funktionsmodul zuzuführenden Prozessfluids, wie z. B. Wasser, sein. Eine weitere konkrete Ausführungsform eines entsprechenden Funktionsmoduls kann z. B. eine Beeinflussungseinrichtung bzw. Aufbereitungseinrichtung zur chemischen und/oder physikalischen Aufbereitung wenigstens eines aus dem wenigstens einen Formteilautomaten oder einem Funktionsmodul abgeführten Prozessfluids, wie z. B. Wasser, sein.

Alternativ oder ergänzend kann das wenigstens eine Funktionsmodul oder wenigstens ein Funktionsmodul als eine Überprüfungseinrichtung zur Überprüfung eines vermittels des wenigstens einen Formteilautomaten hergestellten Partikelschaumformteils im Hinblick auf wenigstens ein Überprüfungskriterium ausgebildet sein oder eine solche umfassen. Eine konkrete Ausführungsform eines entsprechenden Funktionsmoduls kann z. B. eine optische, gravimetrische oder taktile Überprüfungseinrichtung sein, welche eingerichtet ist, ein vermittels des wenigstens einen Formteilautomaten hergestelltes Partikelschaumformteil optisch, gravimetrisch oder taktil im Hinblick auf ein optisches Überprüfungskriterium, wie z. B. Abmessungen, Oberflächengüte, etc., auf ein gravimetrisches Überprüfungskriterium, wie z. B. Gewicht, oder ein taktiles Überprüfungskriterium, wie z. B. Oberflächengüte, zu überprüfen. Typischerweise ist eine entsprechende Überprüfungseinrichtung auch eingerichtet, eine ein entsprechendes Überprüfungsergebnis beschreibende Überprüfungsinformation zu erzeugen. Eine entsprechende Überprüfungsinformation kann wiederum der zentralen Datenverarbeitungseinrichtung zugeführt werden, welche diese bei der Erzeugung entsprechender Betriebsinformationen berücksichtigt.

Die zentrale Datenverarbeitungseinrichtung kann einen Bestandteil des wenigstens einen Formteilautomaten bilden. Die zentrale Datenverarbeitungseinrichtung kann sonach baulich an oder in den wenigstens einen Formteilautomaten, d. h. insbesondere in eine entsprechende, z. B. gehäuse-, gestell- oder rahmenartige, Struktur des wenigstens einen Formteilautomaten, integriert sein. Diese Anordnung kann vorteilhaft sein, als der Erzeugung der seitens der zentralen Datenverarbeitungseinrichtung erzeugten Betriebsinformationen gegebenenfalls auch Betriebsparameter des wenigstens einen Formteilautomaten zugrunde gelegt werden können. Eine Berücksichtigung entsprechender Betriebsparameter des wenigstens einen Formteilautomaten kann eine noch bedarfsgerechtere und damit effizientere Steuerung und/oder Regelung des Betriebs jeweiliger Funktionsmodule ermöglichen.

Selbstverständlich ist es grundsätzlich auch denkbar, dass es sich bei der zentralen Datenverarbeitungseinrichtung um eine eigenständige bzw. separate Funktionseinrichtung der Anlage handelt. Auch in diesem Fall kann die zentrale Datenverarbeitungseinrichtung entsprechende Betriebsparameter des wenigstens einen Formteilautomaten, z. B. über eine mit dem wenigstens einen Formteilautomaten bestehende Datenverbindung, empfangen und der Erzeugung entsprechender Betriebsinformationen zugrunde legen.

Grundsätzlich unabhängig von der Anordnung der zentralen Datenverarbeitungseinrichtung respektive von dem Ort der Anordnung der zentralen Datenverarbeitungseinrichtung kann die zentrale Datenverarbeitungseinrichtung eingerichtet sein, entsprechende Betriebsinformationen auf Grundlage einer wenigstens einen Betriebsparameter und/oder -zustand des wenigstens einen Formteilautomaten und/oder des wenigstens einen Funktionsmoduls beschreibenden Betriebszustandsinformation zu erzeugen. Mithin können Betriebsparameter und/oder -zustände des wenigstens einen Formteilautomaten und/oder des wenigstens einen Funktionsmoduls bei der Erzeugung entsprechender Betriebsinformationen berücksichtigt werden, was eine bedarfsgerechte und damit effiziente Steuerung und/oder Regelung des Betriebs der gesamten Anlage ermöglicht.

Um entsprechende Betriebszustandsinformationen zu erfassen, kann die Anlage eine Erfassungseinrichtung umfassen, welche zur Erfassung wenigstens eines Betriebsparameters oder -zustands des wenigstens einen Formteilautomaten und/oder des wenigstens einen Funktionsmoduls und zur Erzeugung einer wenigstens einen erfassten Betriebsparameter oder -zustand des wenigstens einen Formteilautomaten und/oder des wenigstens einen Funktionsmoduls beschreibenden Betriebszustandsinformation eingerichtet ist.

Eine entsprechende Erfassungseinrichtung kann ein oder mehrere dem wenigstens einen Formteilautomaten und/oder dem wenigstens einen Funktionsmodul zuordenbare oder zugeordnete Erfassungselemente umfassen, welche zur Erzeugung einer wenigstens einen Betriebszustand des wenigstens einen Formteilautomaten und/oder des wenigstens einen Funktionsmoduls beschreibenden Betriebszustandsinformation eingerichtet sind. Entsprechende Erfassungselemente können z. B. als Sensorelemente ausgebildet sein oder solche umfassen, welche z. B. eingerichtet sind, chemische und/oder physikalische Parameter, wie z. B. Druck, Temperatur, zu erfassen.

Wie erwähnt, ist die zentrale Datenverarbeitungseinrichtung typischerweise eingerichtet, entsprechende Betriebsinformationen auf Grundlage einer die Konfiguration der individuell konfigurierten Formteilautomat-Funktionsmodul-Anordnung beschreibenden Erfassungsinformation zu erzeugen. Um eine entsprechende Erfassungsinformation zu erzeugen, kann die Anlage wenigstens eine hardware- und/oder softwaremäßig implementierte Erfassungseinrichtung umfassen, welche zur Erfassung einer die Konfiguration der individuell konfigurierten Formteilautomat-Funktionsmodul-Anordnung beschreibenden Erfassungsinformation und zur Erzeugung einer die Konfiguration der individuell konfigurierten Formteilautomat-Funktionsmodul-Anordnung beschreibenden Erfassungsinformation eingerichtet ist.

Eine entsprechende Erfassungseinrichtung kann ein oder mehrere dem wenigstens einen Formteilautomaten und/oder dem wenigstens einen Funktionsmodul zuordenbare oder zugeordnete Erfassungselemente umfassen, welche zur Erzeugung einer die Anordnung des wenigstens einen Formteilautomaten und/oder des wenigstens einen Funktionsmoduls innerhalb der individuell konfigurierten Formteilautomat-Funktionsmodul-Anordnung beschreibenden Erfassungsinformation eingerichtet sind. Entsprechende Erfassungselemente können z. B. zur Erfassung maschinenlesbarer Codierungen, Daten- bzw. Informationsträger, etc., eingerichtet sein, welche die Auswahl, Anzahl und Kopplung von Formteilautomat(en) und Funktionsmodul(en) beschreiben. Entsprechende Erfassungselemente können z. B. als Leseeinrichtungen zum Auslesen maschinenlesbarer Codierungen, Daten- bzw. Informationsträger, etc. ausgebildet sein oder solche umfassen. Alternativ oder ergänzend können entsprechende Erfassungselemente z. B. zur optischen Erfassung von Auswahl, Anzahl und Kopplung von Formteilautomat(en) und Funktionsmodul(en) innerhalb einer individuell konfigurierten Formteilautomat-Funktionsmodul-Anordnung eingerichtet sein. Entsprechende Erfassungselemente können z. B. als Kameraeinrichtungen zum Auslesen maschinenlesbarer Codierungen, Daten- bzw. Informationsträger, etc. ausgebildet sein oder solche umfassen.

Eine durch eine entsprechende Erfassungsinformation beschriebene Konfiguration einer individuell konfigurierten Formteilautomat-Funktionsmodul-Anordnung kann seitens der zentralen Datenverarbeitungseinrichtung auch einer Überprüfung im Hinblick auf wenigstens ein Überprüfungskriterium unterzogen werden. Beispielsweise ist eine Plausibilitätsüberprüfung einer individuell konfigurierten Formteilautomat-Funktionsmodul-Anordnung im Hinblick auf wenigstens ein Plausibilitätskriterium denkbar, anhand welcher z. B. überprüft werden kann, ob die Konfiguration der Formteilautomat-Funktionsmodul-Anordnung, d. h. insbesondere die Auswahl, Anzahl und Kopplung von Formteilautomat(en) und Funktionsmodul(en) plausibel ist. Weiter beispielsweise ist eine Effizienzüberprüfung einer individuell konfigurierten Formteilautomat-Funktionsmodul-Anordnung im Hinblick auf wenigstens ein Effizienzkriterium denkbar, anhand welcher z. B. überprüft werden kann, ob die Konfiguration der Formteilautomat-Funktionsmodul-Anordnung, d. h. insbesondere die Auswahl, Anzahl und Kopplung von Formteilautomat(en) und Funktionsmodul(en) einen effizienten Betrieb der Anlage ermöglicht. Weiter beispielsweise ist eine Sicherheitsüberprüfung einer individuell konfigurierten Formteilautomat-Funktionsmodul-Anordnung im Hinblick auf wenigstens ein Sicherheitskriterium denkbar, anhand welcher z. B. überprüft werden kann, ob die Konfiguration der Formteilautomat-Funktionsmodul-Anordnung, d. h. insbesondere die Auswahl, Anzahl und Kopplung von Formteilautomat(en) und Funktionsmodul(en) einen sicheren Betrieb der Anlage ermöglicht.

Ein zweiter Aspekt der Erfindung betrifft ein Verfahren zur Ausbildung einer individuell konfigurierten Formteilautomat-Funktionsmodul-Anordnung, welche wenigstens einen Formteilautomat und wenigstens ein Funktionsmodul umfasst. Das Verfahren zeichnet sich durch die folgenden Schritte aus:
- Bereitstellen wenigstens eines Formteilautomaten, welcher wenigstens eine Formwerkzeugeinrichtung zur Verarbeitung von expandierbarem oder expandiertem Partikelschaummaterial zur Herstellung eines Partikelschaumformteils umfasst, wobei der wenigstens eine Formteilautomat wenigstens eine Schnittstelle zur, insbesondere funktionellen und/oder konstruktiven, Ankopplung eines dem wenigstens einen Formteilautomaten funktionell zuordenbaren Funktionsmodul zur Ausbildung einer individuell konfigurierten Formteilautomat-Funktionsmodul-Anordnung aufweist;
- Bereitstellen wenigstens eines dem wenigstens einen Formteilautomat unter Ausbildung einer individuell konfigurierten Formteilautomat-Funktionsmodul-Anordnung individuell zuordenbaren Funktionsmoduls, wobei das wenigstens eine Funktionsmodul wenigstens eine Schnittstelle zur, insbesondere funktionellen und/oder konstruktiven, Ankopplung an den wenigstens einen Formteilautomaten zur Ausbildung einer individuell konfigurierten Formteilautomat-Funktionsmodul-Anordnung aufweist;
- Anordnen des wenigstens einen Formteilautomaten in einer definierten räumlichen Anordnung und/oder Ausrichtung, insbesondere relativ zu dem wenigstens einen Funktionsmodul, und/oder Anordnen des wenigstens einen Funktionsmoduls in einer definierten räumlichen Anordnung und/oder Ausrichtung, insbesondere relativ zu dem wenigstens einen Formteilautomaten,
- Ankoppeln des wenigstens einen Formteilautomaten an das wenigstens eine Funktionsmodul, oder umgekehrt, unter Ausbildung einer individuell konfigurierten Formteilautomat-Funktionsmodul-Anordnung.

Ein dritter Aspekt der Erfindung betrifft ein Verfahren zur Herstellung wenigstens eines Partikelschaumformteils aus einem expandierbaren oder expandierten Partikelschaummaterial. Das Verfahren zeichnet sich dadurch aus, dass zur Durchführung des Verfahrens eine Anlage nach dem ersten Aspekt der Erfindung verwendet wird.

Sämtliche Ausführungen im Zusammenhang mit der Anlage gemäß dem ersten Aspekt gelten analog für das Verfahren nach dem zweiten Aspekt der Erfindung und für das Verfahren nach dem dritten Aspekt der Erfindung.

Die Erfindung ist anhand von Ausführungsbeispielen in den Zeichnungen näher erläutert. Dabei zeigt:
Fig. 1 eine Prinzipdarstellung einer Anlage zur Herstellung eines Partikelschaumformteils gemäß einem Ausführungsbeispiel; und
Fig. 2 eine Prinzipdarstellung einer Anlage zur Herstellung eines Partikelschaumformteils gemäß einem weiteren Ausführungsbeispiel.

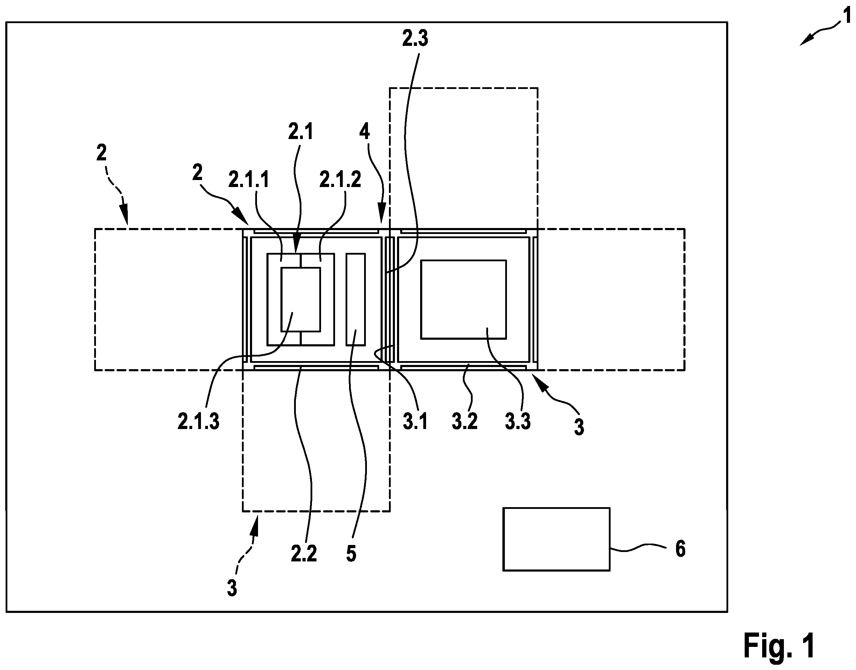

Fig. 1 zeigt eine Prinzipdarstellung einer Anlage 1 zur Herstellung eines Partikelschaumbauteils gemäß einem Ausführungsbeispiel.

Die Anlage 1 ist zur Verarbeitung von Kunststoffpartikeln aus wenigstens einem expandierbaren oder expandierten Partikelschaummaterial, d. h. z. B.

Kunststoffpartikeln aus expandierbaren oder expandierten Polyolefinen, expandierbaren oder expandierten Polystyrolen, etc., zur Herstellung von Partikelschaumformteilen bzw. Partikelschaumbauteilen eingerichtet und umfasst hierzu Einrichtungen zur Durchführung einer oder mehrerer Arbeitsprozesse zur Verarbeitung von entsprechenden Kunststoffpartikeln zur Herstellung eines Partikelschaumformteils.

Der Begriff "Arbeitsprozess" beinhaltet grundsätzlich jedweden vermittels der Anlage 1 durchführbaren Prozess, welcher direkt oder indirekt mit der Verarbeitung von Kunststoffpartikeln aus wenigstens einem expandierbaren oder expandierten Partikelschaummaterial zur Herstellung eines Partikelschaumformteils in einem Zusammenhang steht.

Die Anlage 1 umfasst wenigstens einen Formteilautomaten 2. Der Formteilautomat 2 ist zur Durchführung einer oder mehrerer Verarbeitungsprozesse zur Verarbeitung von Kunststoffpartikeln aus wenigstens einem Partikelschaummaterial zur Herstellung eines Partikelschaumformteils eingerichtet. Der Formteilautomat 2 kann daher auch als Vorrichtung zur Verarbeitung von Kunststoffpartikeln aus wenigstens einem expandierbaren oder expandierten Partikelschaummaterial bezeichnet bzw. erachtet werden. Der Formteilautomat 2 umfasst eine Formwerkzeugeinrichtung 2.1 zur Verarbeitung von Kunststoffpartikeln aus wenigstens einem expandierbaren oder expandierten Partikelschaummaterial zur Herstellung eines Partikelschaumformteils. Die Formwerkzeugeinrichtung 2.1 umfasst eine durch ein oder mehrere Formwerkzeugelemente 2.1.1, 2.1.2 definierbare oder definierte Formwerkzeugkavität 2.1.3, innerhalb welcher Kunststoffpartikel aus wenigstens einem expandierbaren oder expandierten Partikelschaummaterial unter Ausbildung entsprechender Partikelschaumformteile verarbeitet werden können. Der Formteilautomat 2 kann eine, z. B. gehäuse-, gestell- oder rahmenartige, Struktur 2.2 umfassen, an oder in welcher wenigstens die Formwerkzeugeinrichtung 2.1 angeordnet oder ausgebildet ist.

Der Formteilautomat 2 weist wenigstens eine Schnittstelle 2.3 zur, insbesondere funktionellen und/oder konstruktiven, Ankopplung wenigstens eines dem Formteilautomaten 2 funktionell zuordenbaren oder zugeordneten Funktionsmoduls 3 zur Ausbildung einer individuell konfigurierten Formteilautomat-Funktionsmodul-Anordnung 4 auf. Bei der Schnittstelle 2.3 kann es sich entsprechend um eine funktionelle und/oder konstruktive Schnittstelle handeln. Die Schnittstelle 2.3 kann sonach eingerichtet sein, eine funktionelle und/oder konstruktive Kopplung des Formteilautomaten 2 mit wenigstens einem dem Formteilautomaten 2 funktionell zuordenbaren oder zugeordneten Funktionsmodul 3 zur Ausbildung einer individuell konfigurierten Formteilautomat-Funktionsmodul-Anordnung 4 herzustellen. Jeweilige formteilautomatseitige Schnittstellen 2.3 sind insbesondere eingerichtet, mit jeweiligen funktionsmodulseitigen Schnittstellen 3.1 unter Ausbildung einer individuell konfigurierbaren bzw. konfigurierten Formteilautomat-Funktionsmodul-Anordnung 4 zusammenzuwirken. Die formteilautomatseitige Schnittstelle 2.3 ermöglicht dabei insbesondere ein direktes Ankoppeln wenigstens eines Funktionsmoduls 3; insbesondere derart, dass eine formteilautomatseitige Struktur 2.2 bzw. Gehäusestruktur direkt an eine Struktur 3.2 bzw. Gehäusestruktur des jeweiligen Funktionsmoduls 3 ankoppelbar oder angekoppelt ist.

Die Anlage 1 umfasst weiterhin wenigstens ein dem Formteilautomaten 2 unter Ausbildung der individuell konfigurierten Formteilautomat-Funktionsmodul-Anordnung 4 individuell zuordenbares oder zugeordnetes Funktionsmodul 3. Das Funktionsmodul 3 ist zur Durchführung einer oder mehrerer Arbeitsprozesse zur Verarbeitung von Kunststoffpartikeln aus wenigstens einem Partikelschaummaterial zur Herstellung eines Partikelschaumformteils eingerichtet. Das Funktionsmodul 3 umfasst je nach seiner konkreten Funktionalität wenigstens eine Funktionseinheit 3.3, welche zur Durchführung eines oder mehrerer Arbeitsprozesse zur Verarbeitung von Kunststoffpartikeln aus wenigstens einem Partikelschaummaterial zur Herstellung eines Partikelschaumformteils eingerichtet ist. Bei einem entsprechenden Arbeitsprozess kann es sich z. B. um einen entsprechenden Bereitstellungsprozess, um einen entsprechenden Förderprozess, um einen entsprechenden Füllprozess, oder um einen entsprechenden Aufbereitungsprozess handeln. Das Funktionsmodul 3 umfasst die bereits erwähnte, z. B. gehäuse-, gestell- oder rahmenartige, Struktur 3.1 an oder in welcher die wenigstens eine Funktionseinheit 3.3 angeordnet oder ausgebildet ist.

Das Funktionsmodul 3 weist die ebenso bereits erwähnte wenigstens eine Schnittstelle 3.1 zur, insbesondere funktionellen und/oder konstruktiven, Ankopplung an den Formteilautomaten 3 zur Ausbildung der individuell konfigurierten Formteilautomat-Funktionsmodul-Anordnung 4 auf. Bei der Schnittstelle 3.1 kann es sich entsprechend um eine funktionelle und/oder konstruktive Schnittstelle handeln. Die Schnittstelle 3.1 kann sonach eingerichtet sein, eine funktionelle und/oder konstruktive Kopplung des Funktionsmoduls 3 mit dem Formteilautomaten 4 zur Ausbildung der individuell konfigurierten Formteilautomat-Funktionsmodul-Anordnung 4 herzustellen. Jeweilige funktionsmodulseitige Schnittstellen 3.1 sind insbesondere eingerichtet, mit jeweiligen formteilautomatseitigen Schnittstellen 2.3 unter Ausbildung der individuell konfigurierbaren bzw. konfigurierten Formteilautomat-Funktionsmodul-Anordnung 4 zusammenzuwirken. Die funktionsmodulseitige Schnittstellen 3.1 ermöglichen dabei insbesondere ein direktes Ankoppeln des Formteilautomaten 2; insbesondere derart, dass die funktionsmodulseitige Struktur 3.1 bzw. Gehäusestruktur direkt an die Struktur 2.2 bzw. Gehäusestruktur des Formteilautomaten 2 ankoppelbar oder angekoppelt ist.

Wie durch die strichlierten Kästen angedeutet, ist es denkbar, dass über entsprechende formteilautomatseitige Schnittstellen 2.3 auch mehrere Formteilautomaten 2 miteinander gekoppelt sein bzw. werden. Gleichermaßen ist es denkbar, dass über entsprechende funktionsmodulseitige Schnittstellen 3.1 mehrere Funktionsmodule 3 miteinander gekoppelt sein bzw. werden können. Ebenso ist es denkbar, dass mehrere miteinander gekoppelte Formteilautomaten 2 mit mehreren miteinander gekoppelten Funktionsmodulen 3 gekoppelt sind.

Grundsätzlich kann die Anlage 1 sonach mehrere Formteilautomaten 2 gleicher oder unterschiedlicher Konfiguration und/oder mehrere Funktionsmodule 3 gleicher oder unterschiedlicher Konfiguration, d. h. insbesondere gleicher oder unterschiedlicher Funktionalität, aufweisen. Dabei können jeweilige Formteilautomaten 2 und/oder jeweilige Funktionsmodule 3 z. B. in paralleler und/oder serieller Anordnung angeordnet sein.

Die Formteilautomat-Funktionsmodul-Anordnungen 4 kann als individuell konfigurierbare bzw. konfigurierte Fertigungsanordnung bzw. -maschine zur Herstellung von Partikelschaumformteilen erachtet werden. Die individuelle Konfiguration der Formteilautomat-Funktionsmodul-Anordnung 4 kann entsprechend so gewählt sein bzw. werden, dass diese eine autarke Herstellung von Partikelschaumformteilen ermöglicht. Mithin können im Betrieb der Anlage 1 erforderliche Versorgungsmedien, Materialien, etc. dezentral und direkt in der Anlage 1 bereitgestellt, vorbereitet, verarbeitet und nachbereitet werden.

Die Anlage 1 umfasst weiterhin eine hardware- und/oder softwaremäßig implementierte zentrale Datenverarbeitungseinrichtung 5. Die zentrale Datenverarbeitungseinrichtung 5 ist auf Grundlage der bzw. einer Konfiguration der individuell konfigurierten Formteilautomat-Funktionsmodul-Anordnung 4 zur Erzeugung von den Betrieb des Formteilautomaten 2 und/oder des Funktionsmoduls 3 regelnden und/oder steuernden Betriebsinformationen eingerichtet. Die zentrale Datenverarbeitungseinrichtung 5 ist typischerweise eingerichtet, entsprechende Betriebsinformationen auf Grundlage der die Konfiguration der Formteilautomat-Funktionsmodul-Anordnung 4 beschreibenden Erfassungsinformation zu erzeugen. Die zentrale Datenverarbeitungseinrichtung 5 kann ein oder mehrere hardware- und/oder softwaremäßig implementierte Datenverarbeitungselemente (nicht gezeigt) umfassen, welche auf Grundlage der Konfiguration der Formteilautomat-Funktionsmodul-Anordnung 4 bzw. von die Formteilautomat-Funktionsmodul-Anordnung beschreibenden Daten, d. h. z. B. entsprechender Erfassungsinformationen, Datenverarbeitungsprozesse zur Erzeugung entsprechender Betriebsinformationen ausführen. Die zentrale Datenverarbeitungseinrichtung 5 ist insbesondere eingerichtet, entsprechende Betriebsinformationen zu erzeugen, welche eine vollständig automatisierbare bzw. automatisierte Regelung und/oder Steuerung des Betriebs des Formteilautomaten 2 und/oder des Funktionsmoduls 3 ermöglichen. Entsprechende Betriebsinformationen können sämtliche für eine vollständig automatisierbare bzw. automatisierte Regelung und/oder Steuerung des Betriebs des Formteilautomaten 2 und/oder des Funktionsmoduls 3 erforderliche Regelungs- und/oder Steuerungsinformationen bzw. -vorschriften beinhalten. Mithin kann auf Grundlage entsprechender Betriebsinformationen eine vollständig autarke Regelung und/oder Steuerung des Betriebs des Formteilautomaten 2 und/oder des Funktionsmoduls 3 erfolgen.

Entsprechend kann die zentrale Datenverarbeitungseinrichtung 5 auf Grundlage entsprechender Betriebsinformationen auch zur Steuerung bzw. Regelung des Betriebs der gesamten Anlage 1 eingerichtet sein. Dem Betrieb der Anlage 1 können sonach Betriebsinformationen zugrunde gelegt werden, welche auf Grundlage der individuellen Konfiguration der Anlage 1, d. h. insbesondere der Konfiguration der Formteilautomat-Funktionsmodul-Anordnung 4, erzeugt wurden. Die über die zentrale Datenverarbeitungseinrichtung 5 erzeugbaren oder erzeugten Betriebsinformationen können sonach im Hinblick auf die Konfiguration der Formteilautomat-Funktionsmodul-Anordnung 4 maßgeschneidert sein, was typischerweise einen sehr effizienten Betrieb der Anlage 1 ermöglicht. Dies gilt auch für den Fall, in dem sich eine Konfiguration der Formteilautomat-Funktionsmodul-Anordnung 4 ändert, denn in diesem Fall kann die Änderung der Konfiguration der Formteilautomat-Funktionsmodul-Anordnung 4 von der zentralen Datenverarbeitungseinrichtung 5 berücksichtigt und entsprechend geänderte Betriebsinformationen erzeugt werden.

Wie sich im Weiteren ergibt, kann die zentrale Datenverarbeitungseinrichtung 5 entsprechende Betriebsinformationen, z. B. über formteilautomatseitige und/oder funktionsmodulseitige Datenübertragungseinrichtungen als Beispiele entsprechender Schnittstellen 2.3, 3.1, an den Formteilautomaten 2 und/oder das Funktionsmodul 3 übertragen, sodass die jeweiligen Betriebsinformationen über jeweilige formteilautomatseitige und/oder funktionsmodulseitige Regelungs- und/oder Steuerungseinrichtungen (nicht gezeigt) zur Regelung und/oder Steuerung des Betriebs des Formteilautomaten 2 und/oder des Funktionsmoduls 3 verarbeitet werden können.

Die Anlage 1 ermöglicht es sonach zunächst über das Zusammenwirken jeweiliger formteilautomatseitiger Schnittstellen 2.3 mit jeweiligen funktionsmodulseitigen Schnittstellen 3.1 bedarfsweise individuell konfigurierbare bzw. konfigurierte Formteilautomat-Funktionsmodul-Anordnungen 4 auszubilden, sodass die Anlage 1 einerseits beliebig konfigurierbar ist und andererseits eine bestehende Konfiguration einer Anlage 1, etwa durch Neuanordnung bestehender Formteilautomaten 2 und/oder Funktionsmodule 3, Ergänzung von Formteilautomaten 2 und/oder Funktionsmodulen 3, Entfernung von Formteilautomaten 2 und/oder Funktionsmodulen 3, beliebig veränderbar ist. Durch Ergänzung von Funktionsmodulen 3 können bestehende Funktionalitäten der Anlage 1 bedarfsweise erweitert oder der Anlage 1 bedarfsweise neue Funktionalitäten hinzugefügt werden. Entsprechend können durch eine Entfernung von Funktionsmodulen 3 bestehende Funktionalitäten der Anlage 1 bedarfsweise reduziert werden.

Weiterhin ermöglicht es die Anlage 1 über die zentrale Datenverarbeitungseinrichtung 5, insbesondere automatisierbar bzw. automatisiert, auf Grundlage der individuellen Konfiguration der Formteilautomat-Funktionsmodul-Anordnung 4 entsprechende Betriebsinformationen zu erzeugen, sodass die Formteilautomat-Funktionsmodul-Anordnung 4 ohne Weiteres in Betrieb genommen und betrieben werden kann. Eine entsprechende Inbetriebnahme bzw. ein entsprechender Betrieb beinhaltet, wie erwähnt, typischerweise eine, insbesondere automatisierbare bzw. automatisierte, Steuerung und/oder Regelung des Betriebs des Formteilautomaten 2 und/oder des Funktionsmoduls 3 der Formteilautomat-Funktionsmodul-Anordnung 4.

Wie erwähnt, kann es sich bei entsprechenden formteilautomatseitigen und/oder funktionsmodulseitigen Schnittstellen 2.3, 3.1 um funktionelle und/oder konstruktive Schnittstellen handeln. Konkrete Beispiele entsprechender Schnittstellen 2.3, 3.1 werden im Weiteren in nicht abschließender Weise erläutert:
Eine entsprechende Schnittstelle 2.3 des Formteilautomaten 2 kann z. B. als eine Anschlusseinrichtung zum Anschluss wenigstens eines, insbesondere leitungsartigen oder -förmigen, Versorgungsmittels zur Versorgung des Formteilautomaten 2 mit wenigstens einem Versorgungsmedium, insbesondere einem elektrischen Energieträger, wie z. B. Strom oder Spannung, und/oder einem thermischen Energieträger, wie z. B. einem Prozessfluid, und/oder einem pneumatischen Energieträger, wie z. B. einem druckbeaufschlagten Gas, ausgebildet sein oder eine solche umfassen. Alternativ oder ergänzend kann eine entsprechende Schnittstelle 3.1 des Funktionsmoduls 3 als eine Anschlusseinrichtung zum Anschluss wenigstens eines, insbesondere leitungsartigen oder -förmigen, Versorgungsmittels zur Versorgung des Funktionsmoduls 3 mit wenigstens einem Versorgungsmedium, insbesondere einem elektrischen Energieträger, wie z. B. Strom oder Spannung, und/oder einem thermischen Energieträger, wie z. B. einem Prozessfluid, und/oder einem pneumatischen Energieträger, wie z. B. einem druckbeaufschlagten Gas, ausgebildet sein oder eine solche umfassen. Über jeweilige formteilautomatseitige und/oder funktionsmodulseitige Anschlusseinrichtungen lassen sich sonach Versorgungsmittel, d. h. z. B. Versorgungsleitungen, zur Versorgung des Formteilautomaten 2 und/oder des Funktionsmoduls 3 mit wenigstens einem Versorgungsmedium an den Formteilautomaten 2 und/oder das Funktionsmodul 3 anschließen.

Ein konkretes Beispiel einer formteilautomatseitigen Anschlusseinrichtung kann eine Anschlusseinrichtung zum Anschluss wenigstens eines Versorgungsmittels zur Versorgung der Formwerkzeugeinrichtung 2.1 mit einem flüssigen und/oder gasförmigen Energieträger, insbesondere einem Prozessfluid, insbesondere Dampf und/oder Wasser, sein oder eine solche umfassen. Entsprechende Anschlusseinrichtungen können ein oder mehrere Anschlusselemente, wie z. B. Anschlussbuchsen, -flansche, etc., umfassen.

Alternativ oder ergänzend kann eine entsprechende Schnittstelle 2.3 des Formteilautomaten 2 z. B. als eine Befestigungseinrichtung zum, insbesondere direkten, Befestigen des Formteilautomaten 2, insbesondere der, z. B. gehäuse-, gestell- oder rahmenartigen, Struktur 2.2 des Formteilautomaten 2, an dem Funktionsmodul 3, insbesondere der, z. B. gehäuse-, gestell- oder rahmenartigen, Struktur 3.2 des Funktionsmoduls 3, ausgebildet sein oder eine solche umfassen. Alternativ oder ergänzend kann eine entsprechende Schnittstelle 3.1 des Funktionsmoduls 3 als eine Befestigungseinrichtung zum, insbesondere direkten, Befestigen des Funktionsmoduls 3, insbesondere der, z. B. gehäuse-, gestell- oder rahmenartigen, Struktur 3.2 des n Funktionsmoduls 3, an dem Formteilautomaten 2, insbesondere der, z. B. gehäuse-, gestell- oder rahmenartigen, Struktur 2.2 des Formteilautomaten 2, ausgebildet sein oder eine solche umfassen. Über jeweilige formteilautomatseitige und/oder funktionsmodulseitige Befestigungseinrichtungen lassen sich sonach direkte Befestigungen des Formteilautomaten 2 an dem Funktionsmodul 3, und umgekehrt, herstellen. Entsprechende Befestigungseinrichtungen können ein oder mehrere Befestigungselemente, wie z. B. Form- und/oder Kraftschlusselemente, wie z. B. Klemm-, Schraub-, Spann- oder Rastelemente, umfassen.

Alternativ oder ergänzend kann eine entsprechende Schnittstelle 2.3 des Formteilautomaten 2, wie erwähnt, als eine Datenübertragungseinrichtung zum, insbesondere direkten, Übertragen von Daten, insbesondere von entsprechenden Betriebsinformationen, an das Funktionsmodul 3, insbesondere an eine den Betrieb des Funktionsmoduls 3 regelnde und/oder steuernde Datenverarbeitungseinrichtung (nicht gezeigt) des Funktionsmoduls 3, ausgebildet sein oder eine solche umfassen. Alternativ oder ergänzend kann eine entsprechende Schnittstelle 3.1 des Funktionsmoduls 3 als eine Datenübertragungseinrichtung zum, insbesondere direkten, Übertragen von Daten, insbesondere entsprechenden Betriebsinformationen, an den Formteilautomaten 2, insbesondere an eine den Betrieb des Formteilautomaten 2 regelnde und/oder steuernde Datenverarbeitungseinrichtung des Formteilautomaten 2, ausgebildet sein oder eine solche umfassen. Über jeweilige formteilautomatseitige und/oder funktionsmodulseitige Datenübertragungseinrichtungen lassen sich sonach direkte oder indirekte Datenübertragungen zwischen dem Formteilautomaten 2 und/oder dem Funktionsmodul 3 herstellen. Entsprechende Datenübertragungseinrichtungen können ein oder mehrere Datenübertragungselemente, wie z. B. Datenübertragungsanschlüsse (Ports), Datenübertragungsantennen, etc., umfassen. Eine Datenübertragung kann in allen Fällen über kabelgebundene Datenübertragungsverbindungen bzw. kabelgebundene Datenübertragungsprotokolle oder über kabellose Datenübertragungsverbindungen (Funk) bzw. entsprechende kabellose Datenübertragungsprotokolle (Funkprotokolle) erfolgen.

Wie weiter oben angedeutet, können entsprechende Datenübertragungseinrichtungen eingerichtet sein, entsprechende seitens der zentralen Datenverarbeitungseinrichtung 5 erzeugte Betriebsinformationen direkt oder indirekt zu übertragen, d. h. insbesondere zu senden und/oder zu empfangen, sodass die jeweiligen Betriebsinformationen über formteilautomatseitige und/oder funktionsmodulseitige Regelungs- und/oder Steuerungseinrichtungen zur Regelung und/oder Steuerung des Betriebs des Formteilautomaten 2 und/oder des Funktionsmoduls 3 verarbeitet werden können. Entsprechende formteilautomatseitige und/oder funktionsmodulseitige Regelungs- und/oder Steuerungseinrichtungen können Bestandteile entsprechender formteilautomatseitiger und/oder funktionsmodulseitiger Datenverarbeitungseinrichtungen bilden.

Einzelne, mehrere oder sämtliche formteilautomatseitige Schnittstellen 2.3 und/oder funktionsmodulseitige Schnittstellen 3.1 können unabhängig von ihrer konkreten Ausführung zumindest teilweise, gegebenenfalls vollständig, standardisiert ausgeführt sein, um das Koppeln von Formteilautomaten 2 und/oder Funktionsmodulen 3 zu vereinfachen.

Wie erwähnt, ist das Funktionsmodul 3 zur Durchführung einer oder mehrerer Arbeitsprozesse zur Verarbeitung von Kunststoffpartikeln aus wenigstens einem expandierbaren oder expandierten Partikelschaummaterial zur Herstellung eines Partikelschaumformteils eingerichtet. Konkrete Ausführungsbeispiele des oder eines entsprechenden Funktionsmoduls 3 werden im Weiteren in nicht abschließender Weise erläutert:
Das Funktionsmodul 3 oder wenigstens ein Funktionsmodul 3 der Anlage 1 kann als eine Bereitstellungseinrichtung zur Bereitstellung wenigstens eines Versorgungsmediums für den Formteilautomaten 2 und/oder für wenigstens ein weiteres Funktionsmodul 3 ausgebildet sein oder eine solche umfassen. Der Begriff "Bereitstellung" kann dabei eine Erzeugung oder Speicherung eines Versorgungsmediums beinhalten. Bei einem entsprechenden Versorgungsmedium kann es sich insbesondere um einen elektrischen Energieträger, wie z. B. Strom oder Spannung, und/oder um einen thermischen Energieträger, wie z. B. ein Prozessfluid, und/oder um einen pneumatischen Energieträger, wie z. B. ein druckbeaufschlagtes Gas, handeln. Bei einem entsprechenden Versorgungsmedium bzw. Energieträger kann es sich auch um ein Prozessfluid oder um ein Temperiermedium handeln.

Eine konkretes Ausführungsbeispiel des Funktionsmoduls 3 kann z. B. eine Bereitstellungseinrichtung bzw. Temperiereinrichtung zur Bereitstellung eines Temperiermediums, wie z. B. Kühlwasser, zur Temperierung des Formteilautomaten 2 sein. Eine weiteres konkretes Ausführungsbeispiel des Funktionsmoduls 3 kann z. B. eine Bereitstellungseinrichtung bzw. Prozessfluidbereitstellungseinrichtung zur Bereitstellung eines Prozessfluids, wie z. B. Dampf, zur Temperierung und damit einhergehend unter Ausbildung eines jeweiligen Partikelschaumformteils zur Verbindung von in der Formwerkzeugkavität 2.1.3 des Formteilautomaten 2 befindlichen Kunststoffpartikeln aus wenigstens einem expandierbaren oder expandierten Partikelschaummaterial sein. Ein weiteres konkretes Ausführungsbeispiel des Funktionsmoduls 3 kann z. B. eine Bereitstellungseinrichtung bzw. Druckgasbereitstellungseinrichtung zur Bereitstellung eines druckbeaufschlagten Gases, wie z. B. Druckluft, z. B. zur Trocknung der Formwerkzeugkavität 2.13 des Formteilautomaten 2 sein.

Alternativ oder ergänzend kann das Funktionsmodul 3 oder wenigstens ein Funktionsmodul 3 als eine Bereitstellungseinrichtung zur Bereitstellung von elektrischer Energie und/oder kinetischer Energie und/oder pneumatischer Energie und/oder thermischer Energie für den Formteilautomaten 2 und/oder für wenigstens ein weiteres Funktionsmodul 3 ausgebildet sein oder eine solche umfassen. Der Begriff "Bereitstellung" kann dabei eine Erzeugung oder Speicherung von elektrischer Energie und/oder kinetischer Energie und/oder pneumatischer Energie und/oder thermischer Energie beinhalten. Bei einem elektrischen Energieträger kann es sich z. B. um Strom oder Spannung handeln. Bei einem thermischen Energieträger kann es sich z. B. um ein temperiertes Prozessfluid, wie z. B. Dampf und/oder Kühlwasser, handeln. Bei einem kinematischen Energieträger kann es sich z. B. um Antriebs- oder Bewegungsenergie handeln. Bei einem pneumatischen Energieträger kann es sich z. B. um ein druckbeaufschlagtes Gas handeln.

Eine konkretes Ausführungsbeispiel des Funktionsmoduls 3 kann auch hier z. B. eine Bereitstellungseinrichtung bzw. Speichereinrichtung zur Bereitstellung bzw. Speicherung eines Temperiermediums, wie z. B. Kühlwasser, zur Temperierung des Formteilautomaten 2 sein. Eine weiteres konkretes Ausführungsbeispiel des Funktionsmoduls 3 kann auch hier z. B. eine Bereitstellungseinrichtung bzw. Speichereinrichtung zur Bereitstellung bzw. Speicherung eines temperierten Prozessfluids, wie z. B. Dampf, sein. Ein weiteres konkretes Ausführungsbeispiel des Funktionsmoduls 3 kann eine Antriebseinrichtung zur Bereitstellung von Antriebsenergie, z. B. zur Verwendung in einem weiteren Funktionsmodul 3, wie z. B. einer Druckgasbereitstellungseinrichtung, sein. Ein weiteres konkretes Ausführungsbeispiel des Funktionsmoduls 3 kann auch hier z. B. eine Bereitstellungseinrichtung bzw. Speichereinrichtung zur Bereitstellung bzw. Speicherung eines druckbeaufschlagten Gases, wie z. B. Druckluft, z. B. zur Trocknung der Formwerkzeugkavität 2.1.3 des Formteilautomaten 2 sein.

Alternativ oder ergänzend kann das Funktionsmodul 3 oder wenigstens ein Funktionsmodul 3 als ein Kraftwerk, insbesondere ein Blockheizkraftwerk, zur Bereitstellung elektrischer Energie und/oder kinetischer Energie und/oder thermischer Energie ausgebildet sein oder ein solches umfassen. Die seitens des Kraftwerks bereitgestellte Energie kann z. B. auf entsprechende Energieträger übertragen und dem Formteilautomaten 2 und/oder einem weiteren Funktionsmodul 3 über geeignete Energietransportmittel zur Verfügung gestellt werden. Sofern die Anlage 1 wenigstens ein Funktionsmodul 3 in Form eines entsprechenden Kraftwerks umfasst, kann die für den Betrieb der Anlage 1 erforderliche Energie völlig unabhängig von anderen Energiequellen erzeugt werden, was einen vollständig autarken Betrieb der Anlage 1 ermöglichen kann.

Alternativ oder ergänzend kann das Funktionsmodul 3 oder wenigstens ein Funktionsmodul 3 als eine Bereitstellungseinrichtung zur Bereitstellung eines über den Formteilautomaten 2 verarbeitbaren oder zu verarbeitbaren expandierbaren oder expandierten Partikelschaummaterials bzw. entsprechenden Kunststoffpartikeln ausgebildet sein oder eine solche umfassen. Ein konkretes Ausführungsbeispiel eines entsprechenden Funktionsmoduls 3 kann hier z. B. eine Fördereinrichtung zur Förderung eines über den Formteilautomaten 2 verarbeitbaren oder zu verarbeitbaren expandierbaren oder expandierten Partikelschaummaterials bzw. entsprechender Kunststoffpartikel in die Formwerkzeugkavität 2.1.3 des Formteilautomaten 2 sein.

Alternativ oder ergänzend kann das Funktionsmodul 3 oder wenigstens ein Funktionsmodul 3 als eine Aufbereitungseinrichtung zur Aufbereitung eines Versorgungsmediums des Formteilautomaten 2 und/oder wenigstens eines anderen Funktionsmoduls 3 ausgebildet sein oder eine solche umfassen. Der Begriff "Aufbereitung" kann die Veränderung wenigstens einen chemischen und/oder physikalischen Parameters des jeweiligen Versorgungsmediums beinhalten.

Ein konkretes Ausführungsbeispiel eines entsprechenden Funktionsmoduls 3 kann z. B. eine Beeinflussungseinrichtung bzw. eine Enthärtungseinrichtung zur chemischen und/oder physikalischen Enthärtung wenigstens eines dem Formteilautomaten 2 oder einem Funktionsmodul 3 zuzuführenden Prozessfluids, wie z. B. Wasser, sein. Ein weiteres konkretes Ausführungsbeispiel des Funktionsmoduls 3 kann z. B. eine Beeinflussungseinrichtung bzw. Aufbereitungseinrichtung zur chemischen und/oder physikalischen Aufbereitung wenigstens eines aus dem Formteilautomaten 2 oder dem oder einem anderen Funktionsmodul 3 abgeführten Prozessfluids, wie z. B. Wasser, sein.

Alternativ oder ergänzend kann das Funktionsmodul 3 oder wenigstens ein Funktionsmodul 3 als eine Überprüfungseinrichtung zur Überprüfung eines vermittels des Formteilautomaten 2 hergestellten Partikelschaumformteils im Hinblick auf wenigstens ein Überprüfungskriterium ausgebildet sein oder eine solche umfassen. Ein konkretes Ausführungsbeispiel eines entsprechenden Funktionsmoduls 3 kann z. B. eine optische, gravimetrische oder taktile Überprüfungseinrichtung sein, welche eingerichtet ist, ein vermittels des Formteilautomaten 2 hergestelltes Partikelschaumformteil optisch, gravimetrisch oder taktil im Hinblick auf ein optisches Überprüfungskriterium, wie z. B. Abmessungen, Oberflächengüte, etc., auf ein gravimetrisches Überprüfungskriterium, wie z. B. Gewicht, oder ein taktiles Überprüfungskriterium, wie z. B. Oberflächengüte, zu überprüfen. Typischerweise ist eine entsprechende Überprüfungseinrichtung auch eingerichtet, eine ein entsprechendes Überprüfungsergebnis beschreibende Überprüfungsinformation zu erzeugen. Eine entsprechende Überprüfungsinformation kann wiederum der zentralen Datenverarbeitungseinrichtung 5 zugeführt werden, welche diese bei der Erzeugung entsprechender Betriebsinformationen berücksichtigt.

Anhand von Fig. 1 ist ersichtlich, dass die zentrale Datenverarbeitungseinrichtung 5 einen Bestandteil des Formteilautomaten 2 bilden kann. Die zentrale Datenverarbeitungseinrichtung 5 kann sonach baulich an oder in den Formteilautomaten 2, d. h. insbesondere in die, z. B. gehäuse-, gestell- oder rahmenartige, Struktur 2.2 des Formteilautomaten 2, integriert sein. Diese Anordnung kann vorteilhaft sein, als der Erzeugung der seitens der zentralen Datenverarbeitungseinrichtung 5 erzeugten Betriebsinformationen gegebenenfalls auch Betriebsparameter des Formteilautomaten 2 zugrunde gelegt werden können. Eine Berücksichtigung entsprechender Betriebsparameter des Formteilautomaten 2 kann eine noch bedarfsgerechtere und damit effizientere Steuerung und/oder Regelung des Betriebs des Funktionsmoduls 3 bzw. jeweiliger Funktionsmodule 3 ermöglichen.

Es ist grundsätzlich auch denkbar, dass es sich bei der zentralen Datenverarbeitungseinrichtung 5 um eine eigenständige bzw. separate Funktionseinrichtung der Anlage 1 handelt. Auch in diesem Fall kann die zentrale Datenverarbeitungseinrichtung 5 entsprechende Betriebsparameter des Formteilautomaten 2, z. B. über eine mit dem Formteilautomaten 2 bestehende Datenverbindung, empfangen und der Erzeugung entsprechender Betriebsinformationen zugrunde legen.

Die zentrale Datenverarbeitungseinrichtung 5 kann in allen Ausführungsbeispielen eingerichtet sein, entsprechende Betriebsinformationen auf Grundlage einer wenigstens einen Betriebsparameter und/oder -zustand des Formteilautomaten 2 und/oder des Funktionsmoduls 3 beschreibenden Betriebszustandsinformation zu erzeugen. Mithin können Betriebsparameter und/oder -zustände des Formteilautomaten 2 und/oder des 3 Funktionsmoduls bei der Erzeugung entsprechender Betriebsinformationen berücksichtigt werden, was eine bedarfsgerechte und damit effiziente Steuerung und/oder Regelung des Betriebs der gesamten Anlage 1 ermöglicht.

Um entsprechende Betriebszustandsinformationen zu erfassen, kann die Anlage 1 eine Erfassungseinrichtung (nicht gezeigt) umfassen, welche zur Erfassung wenigstens eines Betriebsparameters oder -zustands des Formteilautomaten 2 und/oder des Funktionsmoduls 3 und zur Erzeugung einer wenigstens einen erfassten Betriebsparameter oder -zustand des Formteilautomaten 2 und/oder des Funktionsmoduls 3 beschreibenden Betriebszustandsinformation eingerichtet ist.

Eine entsprechende Erfassungseinrichtung kann ein oder mehrere dem Formteilautomaten 2 und/oder dem Funktionsmodul 3 zuordenbare oder zugeordnete Erfassungselemente umfassen, welche zur Erzeugung einer wenigstens einen Betriebszustand des Formteilautomaten 2 und/oder des Funktionsmoduls 3 beschreibenden Betriebszustandsinformation eingerichtet sind. Entsprechende Erfassungselemente können z. B. als Sensorelemente ausgebildet sein oder solche umfassen, welche z. B. eingerichtet sind, chemische und/oder physikalische Parameter, wie z. B. Druck, Temperatur, zu erfassen.

Wie erwähnt, ist die zentrale Datenverarbeitungseinrichtung 5 eingerichtet, entsprechende Betriebsinformationen auf Grundlage einer die Konfiguration der individuell konfigurierten Formteilautomat-Funktionsmodul-Anordnung 4 beschreibenden Erfassungsinformation zu erzeugen. Um eine entsprechende Erfassungsinformation zu erzeugen, kann die Anlage 1 eine hardware- und/oder softwaremäßig implementierte Erfassungseinrichtung 6 umfassen, welche zur Erfassung einer die Konfiguration der individuell konfigurierten Formteilautomat-Funktionsmodul-Anordnung 4 beschreibenden Erfassungsinformation und zur Erzeugung einer die Konfiguration der individuell konfigurierten Formteilautomat-Funktionsmodul-Anordnung 4 beschreibenden Erfassungsinformation eingerichtet ist.

Die Erfassungseinrichtung 6 kann ein oder mehrere dem Formteilautomaten 2 und/oder dem Funktionsmodul 3 zuordenbare oder zugeordnete Erfassungselemente (nicht gezeigt) umfassen, welche zur Erzeugung einer die Anordnung des Formteilautomaten 2 und/oder des Funktionsmoduls 3 innerhalb der individuell konfigurierten Formteilautomat-Funktionsmodul-Anordnung 4 beschreibenden Erfassungsinformation eingerichtet sind. Entsprechende Erfassungselemente können z. B. zur Erfassung maschinenlesbarer Codierungen, Daten- bzw. Informationsträger, etc., eingerichtet sein, welche die Auswahl, Anzahl und Kopplung von Formteilautomat(en) 2 und Funktionsmodul(en) 3 beschreiben. Entsprechende Erfassungselemente können z. B. als Leseeinrichtungen zum Auslesen maschinenlesbarer Codierungen, Daten- bzw. Informationsträger, etc. ausgebildet sein oder solche umfassen. Alternativ oder ergänzend können entsprechende Erfassungselemente z. B. zur optischen Erfassung von Auswahl, Anzahl und Kopplung von Formteilautomat(en) 2 und Funktionsmodul(en) 3 innerhalb einer individuell konfigurierten Formteilautomat-Funktionsmodul-Anordnung 4 eingerichtet sein. Entsprechende Erfassungselemente können z. B. als Kameraeinrichtungen zum Auslesen maschinenlesbarer Codierungen, Daten- bzw. Informationsträger, etc. ausgebildet sein oder solche umfassen.

Eine durch eine entsprechende Erfassungsinformation beschriebene Konfiguration einer individuell konfigurierten Formteilautomat-Funktionsmodul-Anordnung 4 kann seitens der zentralen Datenverarbeitungseinrichtung 5 auch einer Überprüfung im Hinblick auf wenigstens ein Überprüfungskriterium unterzogen werden. Beispielsweise ist eine Plausibilitätsüberprüfung einer individuell konfigurierten Formteilautomat-Funktionsmodul-Anordnung 4 im Hinblick auf wenigstens ein Plausibilitätskriterium denkbar, anhand welcher z. B. überprüft werden kann, ob die Konfiguration der Formteilautomat-Funktionsmodul-Anordnung 4, d. h. insbesondere die Auswahl, Anzahl und Kopplung von Formteilautomat(en) 2 und Funktionsmodul(en) 3 plausibel ist. Weiter beispielsweise ist eine Effizienzüberprüfung einer individuell konfigurierten Formteilautomat-Funktionsmodul-Anordnung 4 im Hinblick auf wenigstens ein Effizienzkriterium denkbar, anhand welcher z. B. überprüft werden kann, ob die Konfiguration der Formteilautomat-Funktionsmodul-Anordnung 4, d. h. insbesondere die Auswahl, Anzahl und Kopplung von Formteilautomat(en) 2 und Funktionsmodul(en) 3einen effizienten Betrieb der Anlage 1 ermöglicht. Weiter beispielsweise ist eine Sicherheitsüberprüfung einer individuell konfigurierten Formteilautomat-Funktionsmodul-Anordnung 4 im Hinblick auf wenigstens ein Sicherheitskriterium denkbar, anhand welcher z. B. überprüft werden kann, ob die Konfiguration der Formteilautomat-Funktionsmodul-Anordnung 4, d. h. insbesondere die Auswahl, Anzahl und Kopplung von Formteilautomat(en) 2 und Funktionsmodul(en) 3 einen sicheren Betrieb der Anlage 1 ermöglicht.

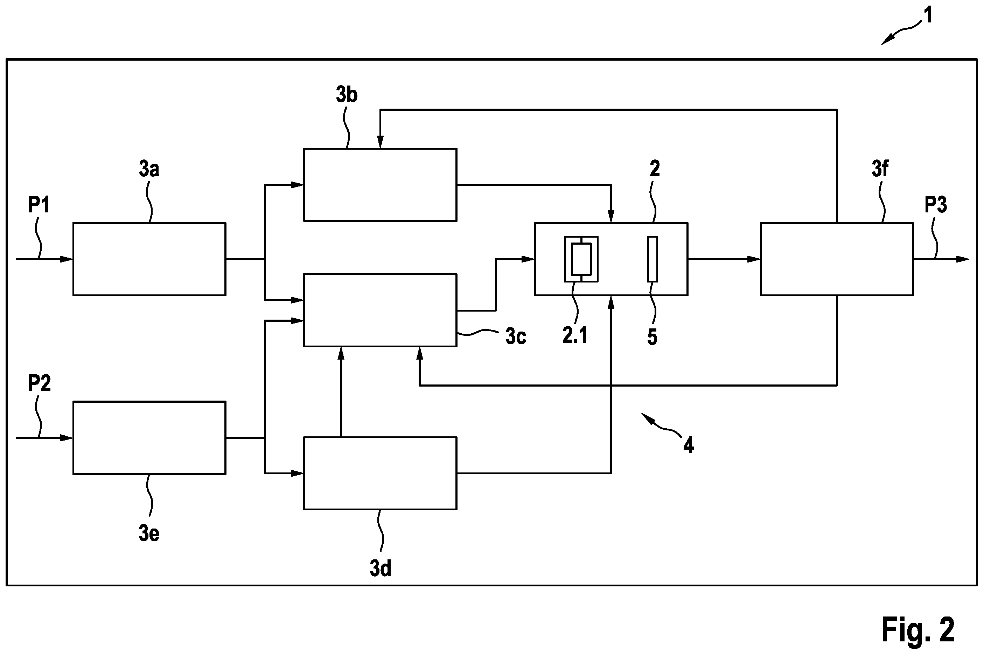

Fig. 2 zeigt eine Prinzipdarstellung einer Anlage 1 zur Herstellung eines Partikelschaumformteils gemäß einem weiteren Ausführungsbeispiel.

Anhand von Fig. 2 ist beispielhaft eine konkrete Konfiguration einer Anlage 1 mit einer individuell konfigurierten Formteilautomat-Funktionsmodul-Anordnung 4 ersichtlich, deren Bestandteile im Einzelnen näher erläutert werden.

Die Anlage 1 umfasst zunächst einen dem in Fig. 1 Gezeigten entsprechenden Formteilautomaten 2.

Als erstes Funktionsmodul 3 umfasst die Anlage 1 zunächst eine erste Aufbereitungseinrichtung 3a zur Aufbereitung eines Versorgungsmediums des Formteilautomaten 2 und/oder wenigstens eines anderen Funktionsmoduls 3. Die erste Aufbereitungseinrichtung 3a ist mit einem durch den Pfeil P1 angedeuteten Zulauf eines Versorgungsmediums, d. h. z. B. Wasser, verbunden. Die erste Aufbereitungseinrichtung 3a kann zur Enthärtung des dieser zugeführten Versorgungsmediums eingerichtet sein.

Als zweites Funktionsmodul 3 umfasst die Anlage 1 eine mit der ersten Aufbereitungseinrichtung 3a verbundene zweite Aufbereitungseinrichtung 3b zur Aufbereitung des über die erste Aufbereitungseinrichtung 3a enthärteten Versorgungsmediums für die Verwendung in dem Formteilautomaten 2 und für die Verwendung in einem dritten Funktionsmodul 3 in Form einer Dampferzeugungseinrichtung 3c.

Als drittes Funktionsmodul 3 umfasst die Anlage 1 die bereits erwähnte Dampferzeugungseinrichtung 3c. Die Dampferzeugungseinrichtung 3c dient zur Bereitstellung von Dampf bzw. Heißdampf als beispielhaftem Prozessfluid für den Formteilautomaten 2 und ist entsprechend mit diesem verbunden.

Als viertes Funktionsmodul 3 umfasst die Anlage 1 die bereits erwähnte Druckluftzeugungseinrichtung 3d. Die Drucklufterzeugungseinrichtung 3d dient einerseits zur Bereitstellung von Druckluft als weiterem beispielhaften Prozessfluid für den Formteilautomaten 2 und ist entsprechend mit diesem verbunden. Die bei der Bereitstellung, d. h. insbesondere der Erzeugung, von Druckluft gegebenenfalls entstehende thermische Energie kann der Dampferzeugungseinrichtung 3c zur Verfügung gestellt werden; entsprechend ist die Druckluftzeugungseinrichtung 3d auch mit der Dampferzeugungseinrichtung 3c verbunden.

Als fünftes Funktionsmodul 5 umfasst die Anlage 1 ein Kraftwerk 3e. Das Kraftwerk 3e ist zur Bereitstellung von elektrischer und/oder kinematischer Energie eingerichtet, welche einerseits - dies gilt insbesondere für kinematische Energie - der Drucklufterzeugungseinrichtung 3d zur Erzeugung von Druckluft und andererseits - dies gilt insbesondere für thermische Energie - der Dampferzeugungseinrichtung 3c zur Verfügung gestellt werden kann; entsprechend ist das Kraftwerk auch mit der Drucklufterzeugungseinrichtung 3d und der Dampferzeugungseinrichtung 3c verbunden. Das Kraftwerk 3e ist mit einem durch den Pfeil P2 angedeuteten Zulauf eines Kraftstoffs, d. h. z. B. Benzin, Diesel, Methanol, Wasserstoff, etc., verbunden.

Als sechstes Funktionsmodul 3 umfasst die Anlage 1 eine dem Formteilautomaten 2 nachgeschaltet angeordnete Sammeleinrichtung 3f für aus dem Formteilautomaten 2 angeführtes verwendetes Prozessfluid, welches, gegebenenfalls über einen Wärmetauscher, in zwei Rückströme, d. h. einerseits einem der zweiten Aufbereitungseinrichtung 3b zugeführten Rückstrom für kaltes Prozessfluid und andererseits einer der Dampferzeugungseinrichtung 3c zugeführten Rückstrom für heißes Prozessfluid, aufgeteilt werden kann. Entsprechend ist die Sammeleinrichtung 3f einerseits mit der zweiten Aufbereitungseinrichtung 3b und andererseits mit der Dampferzeugungseinrichtung 3c verbunden. Durch den Pfeil P3 ist die Möglichkeit der Ableitung von gegebenenfalls vorhandenem Abwasser aus der Sammeleinrichtung 3f dargestellt.

Es sei nochmals erwähnt, dass die in Fig. 2 gezeigte Konfiguration der Anlage 1 rein beispielhaft ist, sodass einzelne, mehrere oder sämtliche der beschriebenen Funktionsmodule 3 z. B. in ihrer Auswahl, Anzahl und Kopplung verändert werden können.

Anhand der Fig. ist ersichtlich, dass ein Verfahren zur Ausbildung einer individuell konfigurierten Formteilautomat-Funktionsmodul-Anordnung 4, die folgenden Schritte umfassen kann:
- Bereitstellen wenigstens eines Formteilautomaten 2, welcher wenigstens eine Formwerkzeugeinrichtung 2.1 zur Verarbeitung von expandierbarem oder expandiertem Partikelschaummaterial zur Herstellung eines Partikelschaumformteils umfasst, wobei der wenigstens eine Formteilautomat 2 wenigstens eine Schnittstelle 2.3 zur, insbesondere funktionellen und/oder konstruktiven, Ankopplung eines dem wenigstens einen Formteilautomaten 2 funktionell zuordenbaren Funktionsmodul 3 zur Ausbildung einer individuell konfigurierten Formteilautomat-Funktionsmodul-Anordnung 4 aufweist;
- Bereitstellen wenigstens eines dem wenigstens einen Formteilautomat 2 unter Ausbildung einer individuell konfigurierten Formteilautomat-Funktionsmodul-Anordnung 4 individuell zuordenbaren Funktionsmoduls 3, wobei das wenigstens eine Funktionsmodul 3 wenigstens eine Schnittstelle 3.1 zur, insbesondere funktionellen und/oder konstruktiven, Ankopplung an den wenigstens einen Formteilautomaten 2 zur Ausbildung einer individuell konfigurierten Formteilautomat-Funktionsmodul-Anordnung 4 aufweist;
- Anordnen des wenigstens einen Formteilautomaten 2 in einer definierten räumlichen Anordnung und/oder Ausrichtung, insbesondere relativ zu dem wenigstens einen Funktionsmodul 3, und/oder Anordnen des wenigstens einen Funktionsmoduls 3 in einer definierten räumlichen Anordnung und/oder Ausrichtung, insbesondere relativ zu dem wenigstens einen Formteilautomaten 2,
- Ankoppeln des wenigstens einen Formteilautomaten 2 an das wenigstens eine Funktionsmodul 3, oder umgekehrt, unter Ausbildung einer individuell konfigurierten Formteilautomat-Funktionsmodul-Anordnung 4.

Mit einer entsprechenden Anlage 1 lässt sich zudem ein Verfahren zur Herstellung wenigstens eines Partikelschaumformteils aus einem expandierbaren oder expandierten Partikelschaummaterial implementieren.

## Patentansprüche

1. Anlage (1) zur Herstellung wenigstens eines Partikelschaumformteils aus einem expandierbaren oder expandiertem Partikelschaummaterial, umfassend:
- wenigstens einen Formteilautomaten (2), welcher wenigstens eine Formwerkzeugeinrichtung (2.1) zur Verarbeitung von expandierbarem oder expandiertem Partikelschaummaterial zur Herstellung eines Partikelschaumformteils umfasst, wobei der wenigstens eine Formteilautomat (2) wenigstens eine Schnittstelle (2.3) zur, insbesondere funktionellen und/oder konstruktiven, Ankopplung eines dem wenigstens einen Formteilautomat (2) funktionell zuordenbaren Funktionsmodul (3) zur Ausbildung einer individuell konfigurierten Formteilautomat-Funktionsmodul-Anordnung (4) aufweist;
- wenigstens ein dem wenigstens einen Formteilautomat (2) unter Ausbildung einer individuell konfigurierten Formteilautomat-Funktionsmodul-Anordnung (4) individuell zuordenbares Funktionsmodul (3), wobei das wenigstens eine Funktionsmodul (3) wenigstens eine Schnittstelle (3.1) zur, insbesondere funktionellen und/oder konstruktiven, Ankopplung an den wenigstens einen Formteilautomaten (2) zur Ausbildung einer individuell konfigurierten Formteilautomat-Funktionsmodul-Anordnung (4) aufweist;
- wenigstens eine zentrale Datenverarbeitungseinrichtung (5), welche auf Grundlage der Konfiguration der individuell konfigurierten Formteilautomat-Funktionsmodul-Anordnung (4) zur Erzeugung von den Betrieb wenigstens des wenigstens einen Funktionsmoduls (3) regelnden und/oder steuernden Betriebsinformationen eingerichtet ist.

2. Anlage nach Anspruch 1, **dadurch gekennzeichnet, dass** der wenigstens eine Formteilautomat (2) eine, z. B. gehäuse-, gestell- oder rahmenartige, Struktur umfasst, an oder in welcher die wenigstens eine Formwerkzeugeinrichtung (2.1) angeordnet oder ausgebildet ist.

3. Anlage nach einem der vorhergehenden Ansprüche, **dadurch gekennzeichnet, dass** die wenigstens eine Schnittstelle (2.3) des wenigstens einen Formteilautomaten (2) als eine Anschlusseinrichtung zum Anschluss wenigstens eines, insbesondere leitungsartigen oder -förmigen, Versorgungsmittels zur Versorgung des wenigstens einen Formteilautomaten (2) mit wenigstens einem Versorgungsmedium, insbesondere einem Prozessfluid, ausgebildet ist oder eine solche umfasst, und/oder
die wenigstens eine Schnittstelle (3.1) des wenigstens einen Funktionsmoduls (3) als eine Anschlusseinrichtung zum Anschluss wenigstens eines, insbesondere leitungsartigen oder -förmigen, Versorgungsmittels zur Versorgung des wenigstens einen Funktionsmoduls (3) mit wenigstens einem Versorgungsmedium, insbesondere einem Prozessfluid, ausgebildet ist oder eine solche umfasst.

4. Anlage nach einem der vorhergehenden Ansprüche, **dadurch gekennzeichnet, dass** die wenigstens eine Schnittstelle (2.1) des wenigstens einen Formteilautomaten (2) als eine Befestigungseinrichtung zum, insbesondere direkten, Befestigen des wenigstens einen Formteilautomaten (2), insbesondere einer, z. B. gehäuse-, gestell- oder rahmenartigen, Struktur des wenigstens einen Formteilautomaten (2), an dem wenigstens einen Funktionsmodul (3), insbesondere einer, z. B. gehäuse-, gestell- oder rahmenartigen, Struktur des wenigstens einen Funktionsmoduls (3), ausgebildet ist oder eine solche umfasst; und/oder
die wenigstens eine Schnittstelle des wenigstens einen Funktionsmoduls (3) als eine Befestigungseinrichtung zum, insbesondere direkten, Befestigen des wenigstens einen Funktionsmoduls (3), insbesondere einer, z. B. gehäuse-, gestell- oder rahmenartigen, Struktur des wenigstens einen Funktionsmoduls (3), an dem wenigstens einen Formteilautomaten (2), insbesondere einer, z. B. gehäuse-, gestell- oder rahmenartigen, Struktur des wenigstens einen Formteilautomaten (2), ausgebildet ist oder eine solche umfasst.

5. Anlage nach einem der vorhergehenden Ansprüche, **dadurch gekennzeichnet, dass** die wenigstens eine Schnittstelle (2.3) des wenigstens einen Formteilautomaten (2) als eine Datenübertragungseinrichtung zum, insbesondere direkten, Übertragen von Daten, insbesondere entsprechenden Betriebsinformationen, an das wenigstens eine Funktionsmodul (3), insbesondere an eine den Betrieb des wenigstens einen Funktionsmoduls (3) regelnde und/oder steuernde Datenverarbeitungseinrichtung des wenigstens einen Funktionsmoduls (3), ausgebildet ist oder eine solche umfasst; und/oder
die wenigstens eine Schnittstelle (3.1) des wenigstens einen Funktionsmoduls (3) als eine Datenübertragungseinrichtung zum, insbesondere direkten, Übertragen von Daten, insbesondere entsprechenden Betriebsinformationen, an den wenigstens einen Formteilautomaten (2), insbesondere an eine den Betrieb des wenigstens einen Formteilautomaten (2) regelnde und/oder steuernde Datenverarbeitungseinrichtung des wenigstens einen Formteilautomaten (2), ausgebildet ist oder eine solche umfasst.

6. Anlage nach einem der vorhergehenden Ansprüche, **dadurch gekennzeichnet, dass** das wenigstens eine Funktionsmodul (3) als eine Bereitstellungseinrichtung zur Bereitstellung wenigstens eines Versorgungsmediums für den wenigstens einen Formteilautomaten (2) und/oder für wenigstens ein weiteres Funktionsmodul (3) ausgebildet ist oder eine solche umfasst.

7. Anlage nach einem der vorhergehenden Ansprüche, **dadurch gekennzeichnet, dass** das wenigstens eine Funktionsmodul (3) als eine Bereitstellungseinrichtung zur Bereitstellung von elektrischer Energie und/oder kinetischer Energie und/oder pneumatischer Energie und/oder thermischer Energie für den wenigstens einen Formteilautomaten (2) und/oder für wenigstens ein weiteres Funktionsmodul (3) ausgebildet ist oder eine solche umfasst.

8. Anlage nach einem der vorhergehenden Ansprüche, **dadurch gekennzeichnet, dass** das wenigstens eine Funktionsmodul (3) als ein Kraftwerk, insbesondere ein Blockheizkraftwerk, zur Bereitstellung elektrischer Energie und/oder thermischer Energie ausgebildet ist oder ein solches umfasst.

9. Anlage nach einem der vorhergehenden Ansprüche, **dadurch gekennzeichnet, dass** das wenigstens eine Funktionsmodul (3) als eine Bereitstellungseinrichtung zur Bereitstellung eines über den wenigstens einen Formteilautomaten (2) verarbeitbaren oder zu verarbeitbaren expandierbaren oder expandierten Partikelschaummaterials ausgebildet ist oder eine solche umfasst.

10. Anlage nach einem der vorhergehenden Ansprüche, **dadurch gekennzeichnet, dass** das wenigstens eine Funktionsmodul (3) als eine Aufbereitungseinrichtung zur Aufbereitung eines Versorgungsmediums des wenigstens einen Formteilautomaten (2) und/oder wenigstens eines anderen Funktionsmoduls (3) ausgebildet ist oder eine solche umfasst.

11. Anlage nach einem der vorhergehenden Ansprüche, **dadurch gekennzeichnet, dass** die zentrale Datenverarbeitungseinrichtung (5) einen Bestandteil des wenigstens einen Formteilautomaten (2) bildet.

12. Anlage nach einem der vorhergehenden Ansprüche, **dadurch gekennzeichnet, dass** die zentrale Datenverarbeitungseinrichtung (5) eingerichtet ist, entsprechende Betriebsinformationen auf Grundlage einer die Konfiguration der individuell konfigurierten Formteilautomat-Funktionsmodul-Anordnung (4) beschreibenden Erfassungsinformation zu erzeugen.

13. Anlage nach Anspruch 12, **gekennzeichnet durch** eine Erfassungseinrichtung, welche zur Erfassung einer die Konfiguration der individuell konfigurierten Formteilautomat-Funktionsmodul-Anordnung (4) beschreibenden Erfassungsinformation und zur Erzeugung einer die Konfiguration der individuell konfigurierten Formteilautomat-Funktionsmodul-Anordnung (4) beschreibenden Erfassungsinformation eingerichtet ist.

14. Anlage nach einem der vorhergehenden Ansprüche, **dadurch gekennzeichnet, dass** die zentrale Datenverarbeitungseinrichtung (5) eingerichtet ist, entsprechende Betriebsinformationen auf Grundlage einer wenigstens einen Betriebszustand des wenigstens einen Formteilautomaten (2) und/oder wenigstens einen Betriebszustand des wenigstens einen Funktionsmoduls (3) beschreibenden Betriebszustandsinformation zur Erzeugung von den Betrieb des wenigstens einen Funktionsmoduls (3) regelnden und/oder steuernden Betriebsinformationen eingerichtet ist,
optional ferner umfassend eine Erfassungseinrichtung, welche zur Erfassung einer wenigstens einen Betriebszustand des wenigstens einen Formteilautomaten und/oder des wenigstens einen Funktionsmoduls beschreibenden Betriebszustandsinformation eingerichtet ist.

15. Verfahren zur Ausbildung einer individuell konfigurierten Formteilautomat-Funktionsmodul-Anordnung (4), welche wenigstens einen Formteilautomaten (2) und wenigstens ein Funktionsmodul (3) umfassend
die Schritte:
- Bereitstellen wenigstens eines Formteilautomaten (2), welcher wenigstens eine Formwerkzeugeinrichtung (2.1) zur Verarbeitung von expandierbarem oder expandiertem Partikelschaummaterial zur Herstellung eines Partikelschaumformteils umfasst, wobei der wenigstens eine Formteilautomat (2) wenigstens eine Schnittstelle (2.3) zur, insbesondere funktionellen und/oder konstruktiven, Ankopplung einer dem wenigstens einen Formteilautomaten (2) funktionell zuordenbaren Funktionsmodul (3) zur Ausbildung einer individuell konfigurierten Formteilautomat-Funktionsmodul-Anordnung (4) aufweist;
- Bereitstellen wenigstens eines dem wenigstens einen Formteilautomaten (2) unter Ausbildung einer individuell konfigurierten Formteilautomat-Funktionsmodul-Anordnung (4) individuell zuordenbares Funktionsmodul (3), wobei das wenigstens eine Funktionsmodul (3) wenigstens eine Schnittstelle (3.1) zur, insbesondere funktionellen und/oder konstruktiven, Ankopplung an den wenigstens einen Formteilautomaten (2) zur Ausbildung einer individuell konfigurierten Formteilautomat-Funktionsmodul-Anordnung (4) aufweist;
- Anordnen des wenigstens einen Formteilautomaten (2) in einer definierten räumlichen Anordnung und/oder Ausrichtung, insbesondere relativ zu dem wenigstens einen Funktionsmodul (3),
- Anordnen des wenigstens einen Funktionsmoduls (3) in einer definierten räumlichen Anordnung und/oder Ausrichtung, insbesondere relativ zu dem wenigstens einen Formteilautomaten (3),
- Ankoppeln des wenigstens einen Formteilautomaten (2) an das wenigstens eine Funktionsmodul (3), oder umgekehrt, unter Ausbildung einer individuell konfigurierten Formteilautomat-Funktionsmodul-Anordnung (4).

## Claims

1. System (1) for the manufacture of at least one particulate foam molding from an expandable or expanded particulate foam material, comprising:
- at least one molding machine (2), which comprises at least one molding device (2.1) for processing expandable or expanded particle foam material for the production of a particle foam molding, wherein the at least one molding machine (2) has at least one interface (2.3) to the, in particular functional and / or constructive, coupling of a functional module (3) to the at least one molding machine (2) functionally assignable to the formation of an individually configured molding machine function module assembly (4);
- at least one of the at least one molding machine (2) forming an individually configured molding machine function module assembly (4) individually assignable function module (3), wherein the at least one function module (3) has at least one interface (3.1) to, in particular functional and / or constructive, coupling to the at least one molding machine (2) for forming an individually configured molding machine function module assembly (4);
- at least one central data processing device (5), which is set up on the basis of the configuration of the individually configured molding automatic function module assembly (4) for generating the operation of at least one function module (3) regulating and / or controlling operating information.

2. System according to claim 1, **characterized in that** the at least one molding machine (2) comprises a structure, e.g. housing, frame or frame-like, on or in which the at least one molding tool device (2.1) is arranged or formed.

3. System according to one of the preceding claims, **characterized in that** the at least one interface (2.3) of the at least one molding machine (2) is formed as a connection means for connecting at least one, in particular conductive or -shaped, supply means for supplying the at least one molding machine (2) with at least one supply medium, in particular a process fluid, or comprises one such, and / or which comprises at least one interface (3.1) of at least one functional module (3) as a connection means for connecting at least one, in particular conductive or -shaped, supply means for supplying at least one functional module (3) with at least one supply medium, in particular a process fluid.

4. System according to one of the preceding claims, **characterized in that** the at least one interface (2.1) of the at least one molding machine (2) as a fastening means for, in particular, direct, fastening of the at least one molding machine (2), in particular a structure of the at least one molding machine (2), to which at least one functional module (3), in particular a structure of at least one functional module (3), in particular a structure of the at least one functional module (3), is formed or comprises one such; and/or
the at least one interface of the at least one functional module (3) as a fastening means for, in particular direct, fastening of the at least one functional module (3), in particular a structure, e.g. housing, frame or frame-like, of the at least one functional module (3), on which at least one molding machine (2), in particular a structure, e.g. housing, frame or frame-like, of the at least one molding machine (2), is formed or comprises one.

5. System according to one of the preceding claims, **characterized in that** the at least one interface (2.3) of the at least one molding machine (2) as a data transmission device for, in particular, direct, transmission of data, in particular corresponding operating information, to which at least one functional module (3), in particular to an operation of the at least one functional module (3) regulating and / or controlling data processing device of at least one functional module (3), is formed or comprises one such; and/or
the at least one interface (3.1) of the at least one functional module (3) as a data transmission means for, in particular direct, transmission of data, in particular corresponding operating information, to the at least one molding machine (2), in particular to the operation of the at least one molding machine (2) regulating and / or controlling data processing device of the at least one molding machine (2), is formed or comprises one such.

6. System according to one of the preceding claims, **characterized in that** the at least one functional module (3) is formed as a provisioning means for providing at least one supply medium for the at least one molding machine (2) and / or for at least one further functional module (3) or includes one such.

7. System according to one of the preceding claims, **characterized in that** the at least one functional module (3) is designed as a provisioning device for providing electrical energy and / or kinetic energy and / or pneumatic energy and / or thermal energy for the at least one molding machine (2) and / or for at least one further functional module (3) or includes one such.

8. System according to one of the preceding claims, **characterized in that** the at least one functional module (3) is designed as a power plant, in particular a combined heat and power plant, for the provision of electrical energy and / or thermal energy or includes one such.

9. System according to one of the preceding claims, **characterized in that** the at least one functional module (3) is formed as a provisioning means for providing a particle foam material which can be processed or processed to be expanded or expanded via the at least one molding machine (2) or comprises one such.

10. System according to one of the preceding claims, **characterized in that** the at least one functional module (3) is formed as a processing device for processing a supply medium of the at least one molding machine (2) and / or at least one other functional module (3) or includes one such.

11. System according to one of the preceding claims, **characterized in that** the central data processing device (5) forms a component of at least one molding machine (2).

12. System according to one of the preceding claims, **characterized in that** the central data processing device (5) is configured to generate corresponding operating information on the basis of a configuration of the individually configured automatic molding function module assembly (4) descriptive detection information.

13. Device according to claim 12, **characterized by** a detection device, which is configured for detecting a configuration of the individually configured molding machine function module assembly (4) descriptive detection information and for generating a configuration of the individually configured molding machine function module assembly (4) descriptive detection information.

14. plant according to one of the preceding claims, **characterized in that** the central data processing device (5) is set up, corresponding operating information on the basis of at least one operating state of the at least one molding machine (2) and / or at least one operating state of the at least one functional module (3) descriptive operating state information for generating the operation of the at least one functional module (3) regulating and / or controlling operating information is set up, optionally further comprising a detection means which is provided for detecting at least one operating state of the at least one molding machine and / or the at least one function module descriptive operating state information.

15. Method for forming an individually configured molding machine function module assembly (4) comprising at least one molding machine (2) and at least one function module (3) comprising the steps:
- providing at least one molding machine (2), which comprises at least one molding device (2.1) for processing expandable or expanded particle foam material for the production of a particle foam molding part, wherein the at least one molding machine (2) has at least one interface (2.3) to the, in particular functional and / or constructive, coupling of a functional module (3) to the at least one molding machine (2) functionally assignable to the formation of an individually configured molding machine function module assembly (4);
- provide at least one of the at least one molding machine (2) forming an individually configured molding machine function module assembly (4) individually assignable function module (3), wherein the at least one function module (3) has at least one interface (3.1) for, in particular functional and / or constructive, coupling to the at least one molding machine (2) for forming an individually configured molding machine function module assembly (4);
- Arranging the at least one molding machine (2) in a defined spatial arrangement and / or orientation, in particular relative to the at least one functional module (3),
- Arranging the at least one functional module (3) in a defined spatial arrangement and / or orientation, in particular relative to the at least one molding machine (3),
- coupling of the at least one molding machine (2) to the at least one function module (3), or vice versa, forming an individually configured molding machine function module arrangement (4).

## Revendications

1. Installation (1) pour la fabrication d'au moins une pièce moulée en mousse de particules à partir d'un matériau expansible ou expansé en mousse de particules, comprenant:
- au moins un distributeur de pièces moulées (2) comprenant au moins un outillage de moulage (2.1) pour le traitement de mousse de particules expansible ou expansée en vue de la fabrication d'un distributeur de pièces moulées en mousse de particules, dans lequel au moins un distributeur de pièces moulées (2) comporte au moins une interface (2.3) pour l'accouplement, notamment fonctionnel et/ou constructif, d'un module fonctionnel (3) attribuable fonctionnellement à au moins un distributeur de pièces moulées (2) en vue de la formation d'une configuration individuelle du module fonctionnel du distributeur de pièces moulées (4);
- au moins un module fonctionnel (3) pouvant être attribué individuellement à au moins un distributeur de pièces moulées (2) avec formation d'une disposition de module fonctionnel de distributeur de pièces moulées (4) configurée individuellement, dans lequel au moins un module fonctionnel (3) comporte au moins une interface (3.1) pour l'accouplement, notamment fonctionnel et/ou constructif, à au moins un distributeur de pièces moulées (2) pour la formation d'une disposition de module fonctionnel de distributeur de pièces moulées (4) configurée individuellement;
- au moins une installation centrale de traitement de l'information (5), établie sur la base de la configuration de l'ensemble de modules fonctionnels d'automates à moules (4) configurés individuellement, pour produire des informations opérationnelles de régulation et/ou de commande d'au moins un module fonctionnel (3).

2. Installation selon la revendication 1, **caractérisée en ce qu'au** moins une machine à mouler (2) comprend une structure, par exemple en forme de boîtier, de support ou de cadre, sur ou dans laquelle au moins une installation d'outillage de moule (2.1) est disposée ou formée.

3. Installation selon l'une quelconque des revendications précédentes, **caractérisée en ce qu'au** moins une interface (2.3) d'au moins un distributeur de pièces moulées (2) est formée ou comprend un dispositif de raccordement pour le raccordement d'au moins un moyen d'alimentation, en particulier de type ou de forme filaire, pour l'alimentation d'au moins un distributeur de pièces moulées (2) avec au moins un moyen d'alimentation, en particulier un fluide de procédé, et/ou qui comporte au moins une interface (3.1) d'au moins un module fonctionnel (3), ou qui est conçue comme un dispositif de raccordement permettant de raccorder au moins un moyen d'alimentation, en particulier un type ou une forme de ligne, pour alimenter au moins un module fonctionnel (3) d'au moins un moyen d'alimentation, en particulier un fluide de procédé.

4. Installation selon l'une quelconque des revendications précédentes, **caractérisée en ce que celle-ci comporte** au moins une interface (2.1) d'au moins un automate à moulures (2) en tant que dispositif de fixation pour fixer, notamment directement, au moins un automate à moulures (2), en particulier une structure, par exemple en forme de boîtier, de châssis ou de cadre, d'au moins un automate à moulures (2), sur laquelle au moins un module fonctionnel (3), en particulier une structure, par exemple en forme de boîtier, de châssis ou de cadre, d'au moins un module fonctionnel (3), est formé ou comprend un tel module; et/ou comportant au moins une interface d'au moins un module fonctionnel (3) en tant que dispositif de fixation permettant de fixer, notamment directement, au moins un module fonctionnel (3), en particulier une structure d'au moins un module fonctionnel (3), par exemple en forme de boîtier, de châssis ou de cadre, sur laquelle au moins un distributeur automatique de pièces moulées (2), en particulier une structure d'au moins un distributeur automatique de pièces moulées (2), par exemple en forme de boîtier, de châssis ou de cadre, est formé ou comporte une telle interface.

5. Installation selon l'une quelconque des revendications précédentes, **caractérisée en ce que celle-ci** comporte au moins une interface (2.3) d'au moins un appareil automatique de moulage (2) en tant que dispositif de transmission de données destiné à transmettre, notamment directement, des données, en particulier des informations d'exploitation correspondantes, à laquelle au moins un module de fonction (3), en particulier un dispositif de traitement de données contrôlant et/ou contrôlant le fonctionnement d'au moins un module de fonction (3), est formée ou comprend un tel dispositif; et/ou
qui comporte au moins une interface (3.1) d'au moins un module fonctionnel (3) en tant que dispositif de transmission de données destiné à transmettre, notamment directement, des données, en particulier des informations d'exploitation correspondantes, à au moins un distributeur automatique de pièces moulées (2), en particulier à un dispositif de traitement de l'information régissant et/ou contrôlant le fonctionnement d'au moins un distributeur automatique de pièces moulées (2), ou à au moins un distributeur automatique de pièces moulées (2).

6. Installation selon l'une quelconque des revendications précédentes, **caractérisée en ce qu'au** moins un module fonctionnel (3) est formé ou comprend un dispositif de mise à disposition pour la mise à disposition d'au moins un support d'alimentation pour au moins un distributeur de pièces moulées (2) et/ou pour au moins un autre module fonctionnel (3).

7. Installation selon l'une quelconque des revendications précédentes, **caractérisée en ce qu'au** moins un module fonctionnel (3) est conçu ou comprend un dispositif de mise à disposition d'énergie électrique et/ou cinétique et/ou d'énergie pneumatique et/ou thermique pour au moins un distributeur automatique de pièces moulées (2) et/ou au moins un autre module fonctionnel (3).

8. Installation selon l'une quelconque des revendications précédentes, **caractérisée en ce qu'au** moins un module fonctionnel (3) est conçu ou comprend une centrale électrique, en particulier une centrale de cogénération, pour fournir de l'énergie électrique et/ou thermique.

9. Installation selon l'une quelconque des revendications précédentes, **caractérisée en ce qu'au** moins un module fonctionnel (3) est formé ou comprend un dispositif de mise à disposition pour la mise à disposition d'un matériau en mousse de particules expansible ou expansible pouvant être traité ou traité par au moins un distributeur automatique de pièces moulées (2).

10. Installation selon l'une quelconque des revendications précédentes, **caractérisée en ce qu'au** moins un module fonctionnel (3) est formé ou comprend un dispositif de traitement pour le traitement d'un milieu d'alimentation d'au moins un distributeur de pièces moulées (2) et/ou d'au moins un autre module fonctionnel (3).

11. Installation selon l'une quelconque des revendications précédentes, **caractérisée en ce que** l'installation centrale de traitement de l'information (5) fait partie intégrante d'au moins un distributeur de pièces moulées (2).

12. Installation selon l'une quelconque des revendications précédentes, **caractérisée en ce que** l'installation centrale de traitement de l'information (5) est mise en place pour produire des informations d'exploitation correspondantes sur la base d'une information d'acquisition décrivant la configuration de l'agencement du module fonctionnel de l'automate de moulage configuré individuellement (4).

13. Installation selon la revendication 12, **caractérisée par** un dispositif d'enregistrement qui est conçu pour enregistrer une information d'enregistrement descriptive de la configuration de l'ensemble de module de fonction de machine à moules configuré individuellement (4) et pour générer une information d'enregistrement descriptive de la configuration de l'ensemble de module de fonction de machine à moules configuré individuellement (4).

14. Installation selon l'une quelconque des revendications précédentes, **caractérisée par le fait que** l'installation centrale de traitement de l'information (5) est installée, que les informations de fonctionnement correspondantes sont établies sur la base d'au moins un état de fonctionnement d'au moins un distributeur automatique de composants (2) et/ou d'au moins un état de fonctionnement d'au moins un module fonctionnel (3) informations de fonctionnement décrivant le fonctionnement d'au moins un module fonctionnel (3) informations de fonctionnement réglant et/ou contrôlant le fonctionnement d'au moins un module fonctionnel (3),
en outre, en option, un dispositif d'enregistrement comprenant des informations sur l'état de fonctionnement d'au moins un mode de fonctionnement d'au moins un distributeur automatique de composants et/ou d'au moins un module fonctionnel.

15. Procédure de formation d'une configuration de module fonctionnel d'automate de moulage (4) configurée individuellement, comprenant au moins un automate de moulage (2) et au moins un module fonctionnel (3), comprenant les étapes suivantes:
- la mise à disposition d'au moins un distributeur de pièces moulées (2) comprenant au moins une installation d'outillage de moulage (2.1) pour le traitement de mousse de particules expansible ou expansée en vue de la fabrication d'un distributeur de pièces moulées en mousse de particules, dans lequel au moins un distributeur de pièces moulées (2) comporte au moins une interface (2.3) pour l'accouplement, notamment fonctionnel et/ou constructif, d'un module fonctionnel (3) attribuable fonctionnellement à au moins un distributeur de pièces moulées (2) en vue de la formation d'une configuration individuelle du module fonctionnel du distributeur de pièces moulées (4);
- la mise à disposition d'au moins un module fonctionnel (3) pouvant être attribué individuellement à au moins un distributeur automatique de pièces moulées (2) sous la forme d'un dispositif de module fonctionnel de distributeur automatique de pièces moulées (4) configuré individuellement, dans lequel au moins un module fonctionnel (3) comporte au moins une interface (3.1) pour l'accouplement, notamment fonctionnel et/ou constructif, à au moins un distributeur automatique de pièces moulées (2) pour la formation d'un dispositif de module fonctionnel de distributeur automatique de pièces moulées (4) configuré individuellement;
- Disposition d'au moins un automate de moulage (2) dans une disposition et/ou une orientation spatiales définies, en particulier par rapport à celle d'au moins un module fonctionnel (3),
- ordonner au moins un module fonctionnel (3) dans une disposition et/ou une orientation spatiales définies, en particulier par rapport à au moins un distributeur automatique de pièces moulées (3),
- l'accouplement d'au moins un distributeur automatique de pièces moulées (2) à au moins un module fonctionnel (3), ou vice versa, avec formation d'une configuration personnalisée du module fonctionnel du distributeur automatique de pièces moulées (4).
